# EUROPÄISCHE PATENTSCHRIFT

(11) **EP 3 930 118 B1**
(45) Veröffentlichungstag und Bekanntmachung des Hinweises auf die Patenterteilung: **26.11.2025**
(21) Anmeldenummer: 20181889.5
(22) Anmeldetag: 24.06.2020
(51) Int. Cl.: H01R 43/052

(54) **KABELBEARBEITUNGSVORRICHTUNG ZUM BEARBEITEN EINES KABELS, COMPUTERIMPLEMENTIERTE VERFAHREN, COMPUTERPROGRAMMPRODUKT SOWIE COMPUTERLESBARES SPEICHERMEDIUM**
CABLE PROCESSING APPARATUS FOR PROCESSING A CABLE, COMPUTER-IMPLEMENTED METHOD, COMPUTER PROGRAM PRODUCT AND COMPUTER READABLE STORAGE MEDIUM
DISPOSITIF D'USINAGE DE CÂBLES PERMETTANT D'USINER UN CÂBLE, PROCÉDÉS MIS EN UVRE PAR ORDINATEUR, PRODUIT DE PROGRAMME INFORMATIQUE AINSI QUE SUPPORT D'ENREGISTREMENT LISIBLE PAR ORDINATEUR

(43) Veröffentlichungstag der Anmeldung: 29.12.2021
(73) Patentinhaber: Schleuniger AG, 3608 Thun (CH)
(72) Erfinder: ZAHLE, Andreas, 42477 Radevormwald (DE)
(74) Vertreter: PPR AG

(56) Entgegenhaltungen:
- WO-A1-2019/207344
- WO-A1-98/13907
- DE-A1- 4 107 250

## Beschreibung

Die Erfindung betrifft eine Kabelbearbeitungsvorrichtung zum Bearbeiten eines Kabels nach Anspruch 1, computerimplementierte Verfahren nach Anspruch 10 und 13, ein Computerprogrammprodukt nach Anspruch 14 sowie ein computerlesbares Speichermedium nach Anspruch 15.

Kabelbearbeitungsvorrichtungen umfassen typischerweise Werkzeuge, mit dem ein Kabel bzw. ein Kabelende bearbeitet werden. Dabei kann das Werkzeug ein Abisoliermesser zum Abisolieren einer Kabelisolierung vom Kabelleiter sein, oder Crimpwerkzeuge umfassen, welche eine Crimpverbindung zwischen einem abisolierten Kabelende und einem Steckerelement herstellen. Beim Crimpen wird typischerweise eines der Werkzeuge beim Bearbeiten derart bewegt, dass ein Fügeverfahren, bei dem zwei Komponenten durch plastische Verformung miteinander verbunden werden, ausgeführt wird. Für jede Werkzeug/Kabel-Paarung muss eine geeignete Kombination von Werkzeug und Pressdruck angewendet werden. So werden die Eigenschaften des Endproduktes verbessert.

Die EP 2 590 275 B1 umfasst eine Kabelbearbeitungsvorrichtung zum Bearbeiten eines Kabels, die eine handbetätigte Positioniereinrichtung zum vertikalen Positionieren eines Kabelanschlags relativ zu einer Kabelförderrichtung einer Kabelbeförderungseinrichtung umfasst. Eine gattungsähnliche Kabelbearbeitungsvorrichtung ist in der DE 10 2017 102 941 A1 offenbart.

Die WO1998/13907 umfasst eine Endloskabelbearbeitungsvorrichtung zum Erzeugen von Kabelteilstücken mit bearbeiteten Enden. Die Vorrichtung umfasst eine Kabelfördervorrichtung mit einer Transporteinrichtung zum Halten und Bewegen eines Kabels in axialer Richtung und quer dazu eine Messerstation. Gemäss einer speziellen Variante sind zwei Transporteinrichtungen in Kabellängsrichtung beidseits der Messerstation angeordnet und halten nach dem Durchtrennen des Kabels je einen der beim Trennen erzeugten Kabelendbereiche in Kabellängsrichtung bewegbar. Zumindest eine dieser Endbearbeitungsstationen ist quer zur Kabellängsrichtung neben der Messerstation angeordnet und zumindest eine Transporteinrichtung ist quer zur Kabellängsrichtung bewegbar, so dass ein Kabelendbereich der Endbearbeitungsstation zuführbar ist.

Nachteilig an diesen bekannten Lösungen ist, dass eine Fehlbedienung der Kabelbearbeitungsvorrichtungen durch einen Bediener nicht ausgeschlossen werden kann, sodass ein erheblicher Ausschuss an Kabelendprodukten bzw. Kabelzwischenprodukten produziert wird.

Aufgabe der vorliegenden Erfindung ist es, die Nachteile des Standes der Technik zumindest teilweise zu beheben und eine Kabelbearbeitungsvorrichtung bereit zu stellen, welche eine individuelle und automatische Vertikalverstellung zum Verbessern der Qualität des Kabelendprodukts oder Kabelzwischenprodukts aufweist. Des Weiteren sollen computerimplementierte Verfahren zum Konfigurieren einer Kabelbearbeitungsvorrichtung sowie zum automatischen Bestimmen und Erstellen von Steuerbefehlen und/oder Steuerdaten bereitgestellt werden, ein Computerprogrammprodukt sowie ein computerlesbares Speichermedium geschaffen werden, mit denen die Bearbeitungsgeschwindigkeit in einer Kabelbearbeitungsvorrichtung erhöht wird und gleichzeitig die Qualität der Kabelendprodukte oder Kabelzwischenprodukte wesentlich verbessert wird.

Die Aufgabe wird durch die Merkmale der unabhängigen Ansprüche gelöst. Vorteilhafte Weiterbildungen sind in den Figuren und in den abhängigen Patentansprüchen dargelegt.

Eine erfindungsgemässe Kabelbearbeitungsvorrichtung zum Bearbeiten eines Kabels, insbesondere eine Crimpstation zum Konfektionieren einer Kabelverbindung an einem Kabelende des Kabels, umfasst eine erste Werkzeugmontage; einen ersten Kabelanschlag; und eine erste Positioniereinrichtung mit einem ersten Positionierantrieb zum vertikalen Positionieren der ersten Werkzeugmontage relativ zu einer Kabelförderrichtung einer Kabelbeförderungseinrichtung, und eine Steuereinrichtung, welche mit dem ersten Positionierantrieb zum Austausch von ersten Steuerdaten verbunden ist. Dabei weist die Kabelförderungseinrichtung einen schwenkbaren Förderarm mit einer Führungseinheit auf, und der erste Kabelanschlag ist ausgebildet, den schwenkbaren Förderarm und/oder die Führungseinheit zu fixieren. Des Weiteren ist eine zweite Positioniereinrichtung mit einem zweiten Positionierantrieb zum zumindest vertikalen Positionieren des ersten Kabelanschlags relativ zur Kabelförderrichtung der Kabelbeförderungseinrichtung vorhanden, wobei der zweite Positionierantrieb mit der Steuereinrichtung zum Austausch von zweiten Steuerdaten verbunden ist.

Die vertikal positionierbaren Einrichtungen der vorliegende Kabelbearbeitungsvorrichtung sind somit individuell bzw. unabhängig voneinander und reproduzierbar automatisiert einstellbar, sodass der Durchsatz an Kabelendprodukten bzw. Kabelzwischenprodukten wesentlich erhöht ist und gleichzeitig die Qualität des Kabelendprodukts bzw. Kabelzwischenprodukts signifikant verbessert wird. Die Werkzeugmontage und/oder der erste Kabelanschlag sind mithilfe deren Positionierantriebe unabhängig voneinander und reproduzierbar von einer beliebigen Stellung bzw. Position in deren Arbeitsstellungen bewegbar. Damit kann die Bearbeitung des Kabelendprodukts bzw. Kabelzwischenprodukts abhängig von deren strukturellem Kabelaufbau, ohne Zutun eines Bedieners, individuell angepasst werden.

Die erste Werkzeugmontage kann beispielsweise der Amboss einer Crimpstation sein. An der ersten Werkzeugmontage bzw. am Amboss sind beispielsweise mehrere Steckerelemente angeordnet, wobei zumindest ein Steckerelement hochgenau mit einem Kabelleiter eines Kabels formschlüssig verbindbar ist, um ein Kabelendprodukt bzw. Kabelzwischenprodukt herzustellen. Der Amboss kann ein erstes Crimpwerkzeug aufweisen, welches während des Bearbeitungsprozesses bzw. Kabelbearbeitungsschritts stationär bzw. ortsfest an der Werkzeugmontage gehalten wird. Während des Bearbeitungsprozesses wird beim Crimpen ein zweites Crimpwerkzeug derart an das erste Crimpwerkzeug herangeführt bzw. damit in Wirkverbindung gebracht, dass eine Crimpverbindung zwischen einem Steckerelement und dem Kabelleiter des Kabels herstellbar ist. Dabei muss der Kabelleiter mit dem Steckerelement derart genau überlappend verbunden werden, dass eine kontaktsichere Verbindung geschaffen wird. Insbesondere kann mit dieser exakten Positionierung des ersten Kabelanschlags verhindert werden, dass sich der Kabelleiter beim Crimpen gegen die Förderrichtung axial verschiebt und sich von der gewünschten Position im Steckerelement entfernt. Unerwünschte Zugkräfte beim Erstellen der Crimpverbindung auf das Kabel werden ebenso damit verhindert. Diese unerwünschten Zugkräfte können ansonsten zu einer Deformation des Kabelleiters und eine damit verbundene Reduktion des Durchmessers des Kabelleiters im Bereich der Crimpverbindung führen.

Das erste und das zweite Crimpwerkzeug sind dem zu bearbeitenden Kabel bzw. Kabelaufbau sowie auch dem damit verbindbaren Steckerelement im Herstellprozess angepasst und individuell je nach Hersteller der Crimpwerkzeuge aufgebaut. Die Crimpwerkzeuge weisen unterschiedliche Dimensionen auf. Das vertikale Positionieren der Werkzeugmontage mithilfe des ersten Positionierantriebs sowie das vertikale Positionieren des ersten Kabelanschlags verbessert das Einstellen der Kabelbearbeitungsvorrichtung, sodass die Qualität des Kabelendprodukts bzw. Kabelzwischenprodukts erhöht bzw. gesichert wird und die Produktivität mit der Kabelbearbeitungsvorrichtung, ohne Zutun eines Bedieners, signifikant erhöht wird (Testversuche ergaben überraschenderweise ca. 500 Kabelendprodukte mit signifikant hoher Qualität zusätzlich, pro Stunde). Gleichzeitig wird der Ausschuss an schadhaften Kabelendprodukten sowie Kabelzwischenprodukten signifikant reduziert. Ein Kabelendprodukt bzw. Kabelzwischenprodukt mit einer Crimpverbindung entsprechend hoher Qualität weist eine kontaktsichere Verbindung auf, d.h. die Crimpverbindung ist mechanisch stabil, sodass Zugkräfte am Steckerelement oder am Kabel nicht zu einer Verschlechterung der Verbindung führen. Weiters weist eine kontaktsichere Verbindung einen grossen Überlappungsbereich zwischen Kabelleiter und Verbindungsabschnitt am Steckerelement auf, sodass die Crimpverbindung qualitätsgerecht ausgeführt ist und z.B. elektrische Spannungsspitzen verhinderbar sind.

Als weiteres nicht abschliessend aufzuzählendes Beispiel einer Kabelbearbeitungsvorrichtung sei eine Abisoliereinrichtung mit einem Abisoliermesser genannt, welches an der vertikal positionierbaren Werkzeugmontage angeordnet ist.

Beispielsweise ist das zur Werkzeugmontage hinzugeführte Kabel an einer schwenkbaren Kabelförderungseinrichtung angeordnet und von einer ersten Bearbeitungsstation zur vorliegend beschriebenen Kabelbearbeitungsvorrichtung in einer Kabelschwenkebene horizontal schwenkbar. Das Vorabpositionieren - also das Positionieren vor dem Start des Kabelbearbeitungsschritts - der ersten Werkzeugmontage unterhalb der Kabelförderrichtung bzw. unterhalb der Kabelschwenkebene verhindert eine Kollision des Kabelendes mit der Werkzeugmontage bzw. mit dem Werkzeug an der Werkzeugmontage beim Einschwenken mit der Kabelförderungseinrichtung. Eine unerwünschte Verformung des Kabelendes wird somit verhindert. Die Arbeitsstellung der Werkzeugmontage ist dabei jene Position der Werkzeugmontage, bei welcher der Kabelleiter des Kabels kollisionsfrei über die Werkzeugmontage bzw. über dem Werkzeug an der Werkzeugmontage horizontal in einer Kabelschwenkebene schwenkbar ist und insbesondere kein Nachpositionieren der Werkzeugmontage vor der Bearbeitung des Kabels erforderlich ist.

Bevorzugt ist der erste Positionierantrieb als Stellantrieb ausgebildet und umfasst z.B. eine Spindel, einen Schiebekeil oder ähnliche geeignete Elemente als Stelleinheit zum Positionieren der Werkzeugmontage. Der Stellantrieb ist mit der Steuereinrichtung zum Austausch von Steuerbefehlen verbunden. Damit ist die Werkzeugmontage einfach reproduzierbar vertikal positionierbar. Dabei empfängt der Stellantrieb zumindest einen Steuerbefehl zum vertikalen Positionieren der Werkzeugmontage als erste Steuerdaten von der Steuereinrichtung. Alternativ dazu ist der erste Positionierantrieb ein Servomotor, sodass die erste Werkzeugmontage vertikal in beide Richtungen hochgenau einstellbar ist. Alternativ kann der erste Positionierantrieb als pneumatischer Antrieb ausgebildet sein, sodass das Positionieren der Werkzeugmontage mit einem kostengünstigen Antrieb schnell ausführbar ist.

Das zu bearbeitende Kabel wird beim Fördern typischerweise entlang der Förderrichtung der Kabelbeförderungseinrichtung bewegt. Dabei kann das zu bearbeitende Kabel in einer Führungseinheit, wie beispielsweise einem exakt für den Kabeldurchmesser ausgelegten, auswechselbaren Führungsröhrchen, zur Werkzeugmontage zuführbar sein. Der erste Kabelanschlag ist ausgebildet, den schwenkbaren Förderarm und/oder die Führungseinheit derart zu fixieren bzw. zu stützen, dass ein reproduzierbarer Kabelbearbeitungsschritt ausführbar ist, ohne dass das Kabel unerwünscht deformiert wird bzw. unerwünscht abknickt. Dabei wirkt der erste Kabelanschlag als ein Gegenlager. Der vorliegend beschriebene Kabelanschlag ist mithilfe der zweiten Positioniereinrichtung vertikal und unabhängig von der Werkzeugmontage motorisch positionierbar. Dabei ist der zweite Positionierantrieb, insbesondere zum zumindest vertikalen Positionieren des ersten Kabelanschlags, mit der Steuereinrichtung zum Austausch von Steuerbefehlen verbunden. Das Vorabpositionieren des ersten Kabelanschlags unterhalb der Kabelförderrichtung bzw. unterhalb der Kabelschwenkebene verhindert eine Kollision des Kabelendes bzw. der Führungseinheit mit dem Kabelanschlag beim Einschwenken. Eine unerwünschte Verformung des Kabelendes ist somit verhinderbar. Die Arbeitsstellung des Kabelanschlags ist dabei jene Position, bei welcher die Kabelförderungseinrichtung kollisionsfrei über den Kabelanschlag schwenkbar ist und insbesondere kein Nachpositionieren des Kabelanschlags vor der Bearbeitung mit dem Werkzeug erfolgt. Ein unerwünschtes Abknicken wird verhindert, denn dieses würde beispielsweise zu einer unerwünschten Bewegung des Kabels gegen die Kabelförderrichtung führen. Diese unerwünschte Bewegung bewirkt einen verkürzten Überlappungsbereich des Kabelleiters mit dem Verbindungsabschnitt am Steckerelement, sodass die Qualität der Crimpverbindung am Kabelendprodukt bzw. Kabelzwischenprodukt signifikant reduziert sein kann und gegebenenfalls das Kabel zum Ausschuss gezählt werden muss.

Bevorzugt ist der zweite Positionierantrieb als Stellantrieb ausgebildet und umfasst eine Spindel als Stelleinheit zum Positionieren des ersten Kabelanschlags. Der Stellantrieb ist mit der Steuereinrichtung zum Austausch von Steuerbefehlen verbunden. Damit ist der erste Kabelanschlag einfach, reproduzierbar, vertikal positionierbar. Dabei empfängt der Stellantrieb zumindest einen Steuerbefehl zum vertikalen Positionieren des Kabelanschlags als zweite Steuerdaten. Alternativ dazu ist die zweite Positioniereinrichtung ein Servomotor, sodass der erste Kabelanschlag vertikal in beide Richtungen hochgenau einstellbar ist. Alternativ kann der zweite Positionierantrieb als pneumatischer Antrieb ausgebildet sein, sodass das Positionieren des ersten Kabelanschlag mit einem kostengünstigen Antrieb schnell ausführbar ist.

Bevorzugterweise ist eine erste Positionssensorik zum Erfassen zumindest der vertikalen Position der Werkzeugmontage vorhanden, wobei die erste Positionssensorik am ersten Positionierantrieb angeordnet ist. Die erste Positionssensorik kann beispielsweise einen Drehsensor oder Hallgeber oder ein anderer derartiger Sensor zum Erfassen der vertikalen Position der Werkzeugmontage, umfassen, welcher die vertikale Position der Werkzeugmontage an der Kabelbearbeitungsvorrichtung einfach erfasst und an die Steuereinrichtung als Sensordaten weitergibt. Damit kann eine im Betrieb aktuelle Position bzw. Stellung der Werkzeugmontage unmittelbar an die Steuereinrichtung übermittelt werden, um die Position bzw. Stellung der Werkzeugmontage zu überprüfen und/oder eine Justierung der Werkzeugmontage zu veranlassen.

Alternativ oder ergänzend umfasst die erste Positionssensorik einen ersten Positionssensor, insbesondere ein mechanischer Positionssensor. Der erste Positionssensor kann beabstandet von, und benachbart zur ersten Positioniereinrichtung angeordnet sein und kann beispielsweise ein optischer Sensor sein. Als optischer Sensor ist beispielsweise eine Lichtschranke und ein Reflektor verwendbar, welcher die Position der Werkzeugmontage relativ zur Kabelförderungseinrichtung optisch einfach bestimmt. Der erste Positionssensor ist mit der Steuereinrichtung zur Übergabe von Sensordaten verbunden.

Vorzugsweise ist eine zweite Positionssensorik zum Erfassen zumindest der vertikalen Position des ersten Kabelanschlags vorhanden, wobei die zweite Positionssensorik am zweiten Positionierantrieb angeordnet ist. Die zweite Positionssensorik kann beispielsweise einen Drehsensor oder Hallgeber oder einen anderen derartigen Sensor zum Erfassen der vertikalen Position des ersten Kabelanschlags, umfassen, welcher die vertikale Position bzw. Stellung des Kabelanschlags an der Kabelbearbeitungsvorrichtung einfach erfasst und an die Steuereinrichtung als Sensordaten weitergibt. Damit kann eine im Betrieb aktuelle Position bzw. Stellung des Kabelanschlags unmittelbar an die Steuereinrichtung übermittelt werden, um die Position bzw. Stellung des Kabelanschlags zu überprüfen und/oder eine Justierung der Werkzeugmontage zu veranlassen.

Alternativ oder ergänzend umfasst die zweite Positionssensorik einen zweiten Positionssensor, insbesondere einen mechanischen Positionssensor. Der zweite Positionssensor kann beabstandet von, und benachbart zur zweiten Positioniereinrichtung angeordnet sein und kann beispielsweise ein optischer Sensor sein. Als optischer Sensor ist beispielsweise eine Lichtschranke verwendbar, welcher die Position des ersten Kabelanschlags relativ zur Kabelförderungseinrichtung optisch einfach bestimmt. Der zweite Positionssensor ist mit der Steuereinrichtung zur Übergabe von Sensordaten verbunden.

Vorteilhaft ist die Steuereinrichtung dazu ausgelegt, bei Erreichen der Arbeitsstellung der Werkzeugmontage zumindest ein Werkzeug der Kabelbearbeitungsvorrichtung zu aktivieren, um einen Kabelbearbeitungsschritt auszuführen. Damit wird der Bearbeitungsprozess am Kabel selbständig, ohne Zutun durch den Bediener, gestartet. Ein Abknicken des Kabels beim Einschwenken des Kabels in die Kabelbearbeitungsvorrichtung und vor dem Bearbeitungsprozess ist verhinderbar und somit ist die Qualität des Kabelendprodukts bzw. des Kabelzwischenprodukts verbessert.

Alternativ oder ergänzend ist die Steuereinrichtung dazu ausgelegt, bei Erreichen der Arbeitsstellung des Kabelanschlags zumindest ein Werkzeug der Kabelbearbeitungsvorrichtung zu aktivieren, um einen Kabelbearbeitungsschritt auszuführen. Damit wird der Bearbeitungsprozess am Kabel selbständig, ohne Zutun durch den Bediener, gestartet, wobei ein Abknicken des Kabels beim Bearbeiten des Kabels in die Kabelbearbeitungsvorrichtung und vor dem Bearbeitungsprozess verhinderbar ist und somit ist die Qualität des Kabelendprodukts bzw. des Kabelzwischenprodukts verbessert.

Bevorzugterweise weist die Steuereinrichtung eine Recheneinheit auf, sodass die Sensordaten zumindest einer der beiden Positionssensoriken einfach verarbeitbar sind.

Bevorzugt ist die Steuereinrichtung mit der ersten Positionssensorik zum Austauschen von Sensordaten verbunden. Dabei ist nicht nur eine Übergabe von Daten möglich, sondern auch eine Einstellung an der ersten Positionssensorik mithilfe der Steuereinrichtung einfach möglich.

Alternativ oder ergänzend ist die Steuereinrichtung mit der zweiten Positionssensorik zum Austauschen von Sensordaten verbunden. Dabei ist nicht nur eine Übergabe von Daten möglich, sondern auch eine Einstellung an der zweiten Positionssensorik mithilfe der Steuereinrichtung einfach möglich.

Vorzugsweise ist die Recheneinheit ausgebildet, um aus den Sensordaten der ersten Positionssensorik zumindest einen Steuerbefehl zum Positionieren der ersten Werkzeugmontage zu erstellen. Damit ist das Positionieren der Werkzeugmontage vollautomatisch und ohne Zutun eines Benutzers möglich, sodass die Qualität des Kabelendprodukts bzw. Kabelzwischenprodukts weiter verbessert wird, da ein Bedienerfehler ausgeschlossen ist. Bei Erreichen der Arbeitsstellung der Werkzeugmontage, also wenn mittels der ersten Positionssensorik festgestellt wird, dass die Werkzeugmontage in die Arbeitsstellung gebracht wird, kann das Schwenken des Förderarms der Kabelförderungseinrichtung deaktiviert werden und ein Kabelbearbeitungsschritt gestartet werden. Damit wird die Betriebssicherheit weiter verbessert.

Alternativ oder ergänzend ist die Recheneinheit ausgebildet, um aus den Sensordaten der zweiten Positionssensorik zumindest einen weiteren Steuerbefehl zum Positionieren des ersten Kabelanschlags zu erstellen. Damit ist das Positionieren des ersten Kabelanschlags vollautomatisch und ohne Zutun eines Benutzers möglich, sodass die Qualität des Kabelendprodukts bzw. Kabelzwischenprodukts weiter verbessert wird, da ein Bedienerfehler ausgeschlossen ist. Bei Erreichen der Arbeitsstellung des ersten Kabelanschlags, also wenn mittels der zweiten Positionssensorik festgestellt wird, dass der erste Kabelanschlag in die Arbeitsstellung gebracht wird, kann das Schwenken des Förderarms der Kabelförderungseinrichtung deaktiviert werden und ein Kabelbearbeitungsschritt gestartet werden.

Bevorzugterweise ist zumindest eine Speichereinheit vorhanden, welche mit der Steuereinrichtung verbunden ist, wobei die Steuereinrichtung ausgebildet ist, um zumindest einen Steuerbefehl aus der zumindest einen Speichereinheit abzurufen, um zumindest einen der beiden Positionierantriebe anzutreiben. Der Steuerbefehl kann dabei Positionsdaten für die Arbeitsstellung der Werkzeugmontage oder/oder des ersten Kabelanschlags umfassen. Die Positionsdaten sind je nach zu bearbeitendem Kabeltyp bzw. Kabelaufbau und je nach Werkzeug in der Kabelbearbeitungsvorrichtung individuell abgestimmt. Dabei sind beispielsweise die Positionsdaten zur Arbeitsstellung der Werkzeugmontage und/oder des ersten Kabelanschlags eines Coaxialkabels unterschiedlich zu den Positionsdaten zur Arbeitsstellung der Werkzeugmontage und/oder des ersten Kabelanschlags eines mehradrigen Bandkabels. Die Werkzeuge zum Bearbeiten dieser beiden genannten Kabeltypen an der Kabelbearbeitungsvorrichtung sind typischerweise unterschiedlich aufgebaut, sodass die Positionsdaten zur Arbeitsstellung der Werkzeugmontage und/oder des ersten Kabelanschlags ebenfalls auf die in der Kabelbearbeitungsvorrichtung angeordneten Werkzeuge abgestimmt sind.

Alternativ oder ergänzend ist zumindest eine Datenbank vorhanden, welche mit der Steuereinrichtung verbunden ist, wobei die Steuereinrichtung ausgebildet ist, um zumindest einen Steuerbefehl aus der zumindest einen Datenbank abzurufen, um zumindest einen der beiden Positionierantriebe anzutreiben. Der Steuerbefehl kann dabei Positionsdaten für die Arbeitsstellung der Werkzeugmontage und/oder des ersten Kabelanschlags umfassen, wie zuvor beschrieben. Die Datenbank kann vorteilhaft als Cloud ausgebildet sein, sodass unterschiedliche Kabelbearbeitungsvorrichtungen einfach auf die Steuerbefehle oder Steuerdatensätze zugreifen können.

Die Arbeitsstellung der Werkzeugmontage und/oder des ersten Kabelanschlags kann abhängig vom strukturellen Aufbau des zu bearbeitenden Kabelendprodukts bzw. Kabelzwischenprodukts, wie nicht abschliessend aufgezählt der Kabeldurchmesser, der Aufbau bzw. das Material des Kabelleiters, der Kabeltyp, die Kabelleiterlänge, das geeignete Führungsröhrchen (Wechselteil passend zum Kabeldurchmesser), der Steckerelementtyp, der Steckerelementaufbau, das Werkzeug an der Kabelbearbeitungsvorrichtung usw. definiert sein. Diese Information kann in dem zumindest einen Steuerbefehl in der Speichereinheit und/oder der Datenbank abgelegt sein. Diese Steuerbefehle sind automatisch von der Steuereinrichtung abrufbar, sodass ohne Zutun eines Bedieners, ein vollautomatisches Einstellen, beispielsweise nach dem Umrüsten von der Bearbeitung eines ersten Kabeltyps zu einem zweiten Kabeltyp, an der Kabelbearbeitungsvorrichtung möglich ist.

Vorzugsweise ist eine Basisstruktur vorhanden und die Werkzeugmontage ortsfest an der Basisstruktur angeordnet, wobei die Basisstruktur mithilfe der ersten Positioniereinrichtung relativ zur Kabelförderrichtung der Kabelförderungseinrichtung zumindest vertikal positionierbar ist. Die Basisstruktur kann an einer Grundstützstruktur beweglich angeordnet sein. Damit kann die Kabelbearbeitungsvorrichtung klein und kompakt aufgebaut sein, da der Abstand zwischen den Werkzeugen in der Kabelbearbeitungsvorrichtung gering ist.

Bevorzugterweise sind ein weiterer Kabelanschlag und eine weitere Positioniereinrichtung vorhanden, wobei die weitere Positioniereinrichtung insbesondere einen weiteren Positionierantrieb zum zumindest vertikalen Positionieren des weiteren Kabelanschlags aufweist. Der weitere Kabelanschlag ist gegenüberliegend zum ersten Kabelanschlag angeordnet und drückt auf die Führungseinheit bzw. das Führungsröhrchen um das Kabel zu fixieren, wenn der Bearbeitungsprozess ausgeführt wird. Beispielsweise wird beim Crimpen der Kabelleiter des Kabels durch die Bewegung des weiteren Kabelanschlags vertikal von oben in den Verbindungsabschnitt des Steckerelements gedrückt. Um ein Überschwingen der massebehafteten Führungseinheit zu verhindern, dient der erste Kabelanschlag als Gegenlager, sodass ein Abknicken des Kabels bzw. des Kabelleiters am Kabel verhindert wird. Zusätzlich wird das zu bearbeitende Kabel fixiert, sodass die Qualität des Kabelendprodukts bzw. des Kabelzwischenprodukts verbessert wird. Die weitere Positioniereinrichtung kann eine Führungsschiene und eine Federeinheit aufweisen, sodass der weitere Kabelanschlag gefedert gelagert ist, um die Führungseinheit bzw. das Kabel nicht zu beschädigen. Der weitere Positionierantrieb kann motorisch ausgebildet sein und mit der Steuereinrichtung zum Austausch Positionsdaten der Arbeitsstellung des weiteren Kabelanschlags verbunden sein. Damit kann auch eine Arbeitsstellung des weiteren Kabelanschlags einfach eingestellt und vollautomatisch eingestellt werden.

Vorzugsweise ist eine Detektionseinrichtung zum Erfassen von kabelspezifischen Daten vorhanden. Die Detektionseinrichtung erfasst beispielsweise eine berührungslose Scannereinheit, wie beispielsweise eine Kamera, oder einen Barcodeleser, oder einen QR-Scanner oder dergleichen, sodass das zu bearbeitende Kabel einfach erkennbar ist und kabelspezifische Daten, ohne Zutun eines Benutzers, erkannt werden. Dafür weist das Kabel beispielsweise einen entsprechenden Code auf oder wird mittels Bilderkennung erkannt. Die kabelspezifischen Daten umfassen insbesondere den strukturellen Aufbau des zu bearbeitenden Kabels, wie nicht abschliessend aufgezählt der Kabeldurchmesser, der Aufbau bzw. das Material des Kabelleiters, die Anzahl der einzelnen Kabelleiter im Kabel, der Kabeltyp, die Kabelleiterlänge, den Aufbau und/oder das Material der Kabelisolierung bzw. Kabelummantelung, usw. Die kabelspezifischen Daten können auch über die Geometrie des Kabels ermittelt werden. Dazu können beispielsweise Bilder dienen, die von der Kamera detektiert werden und mittels Bildverarbeitungsalgorithmen in der Recheneinheit ausgewertet werden. Alternativ können auch andere Sensoren verwendet werden, die das Kabel identifizieren können. Anhand der detektierten kabelspezifischen Daten können zusätzliche Daten, wie beispielsweise der Pressdruck für ein Crimpwerkzeug, aus der Speichereinheit oder der Datenbank in die Recheneinheit geholt werden.

Alternativ oder ergänzend ist eine Detektionseinrichtung zum Erfassen von werkzeugspezifischen Daten vorhanden. Die Detektionseinrichtung erfasst mithilfe der berührungslosen Scannereinheit, wie zuvor beschrieben, den Werkzeugtyp an der Kabelbearbeitungsvorrichtung, wobei die werkzeugspezifischen Daten nicht abschliessend aufgezählt den Aufbau, die Dimension, das Material zumindest eines Werkzeugs an der Kabelbearbeitungsvorrichtung umfasst. Dafür weist das Werkzeug beispielsweise einen entsprechenden Code auf oder wird mittels Bilderkennung erkannt. Die werkzeugspezifischen Daten können auch über die Geometrie des Werkzeugs ermittelt werden. Dazu können beispielsweise Bilder dienen, die von der Kamera detektiert werden und mittels Bildverarbeitungsalgorithmen in der Recheneinheit ausgewertet werden. Alternativ können auch andere Sensoren verwendet werden, die das Werkzeug identifizieren können. Anhand der detektierten werkzeugspezifischen Daten können zusätzliche Daten, wie beispielsweise der Pressdruck für ein Crimpwerkzeug, aus der Speichereinheit oder der Datenbank in die Recheneinheit geholt werden.

Bevorzugt ist die Detektionseinrichtung mit der Steuereinrichtung zum Austausch der kabelspezifischen Daten und/oder der werkzeugspezifischen Daten verbunden. Die Steuereinrichtung ist ausgebildet, die kabelspezifischen Daten und/oder werkzeugspezifische Daten von der Detektionseinrichtung in zumindest einen Steuerbefehl für die Arbeitsstellung der Werkzeugmontage umzuwandeln, um die Werkzeugmontage entsprechend dem zu bearbeitenden Kabel zu positionieren. Alternativ oder ergänzend ist die Steuereinrichtung ausgebildet, die kabelspezifischen Daten und/oder werkzeugspezifischen Daten von der Detektionseinrichtung in zumindest einen Steuerbefehl für die Arbeitsstellung des ersten Kabelanschlags umzuwandeln, um den ersten Kabelanschlag entsprechend dem zu bearbeitenden Kabel zu positionieren. Beispielsweise erfolgt die Umwandlung in der Recheneinheit der Steuereinrichtung.

Alternativ oder ergänzend ist die Steuereinrichtung ausgebildet, um die mit der Detektionseinrichtung erfassten kabelspezifischen Daten und/oder werkzeugspezifischen Daten mit dazu gehörenden Steuerbefehlen in der Speichereinheit und/oder in der Datenbank zu vergleichen, um die Werkzeugmontage und/oder den ersten Kabelanschlag entsprechend dem zu bearbeitenden Kabel zu positionieren bzw. in deren Arbeitsstellung zu bewegen. Damit wird der Grad der Automatisierung weiter erhöht, sodass eine vollautomatische Kabelbearbeitungsvorrichtung zum Konfektionieren eines Kabelendprodukts bzw. Kabelzwischenprodukts bereitgestellt wird.

Bevorzugt ist die Steuereinrichtung ausgebildet, um beim Erfassen von neuen kabelspezifischen Daten und/oder werkzeugspezifischen Daten mit der Detektionseinrichtung eine Überprüfung der Kompatibilität des an der Kabelbearbeitungsvorrichtung angeordneten Werkzeugs mit dem zu bearbeitenden Kabel durchzuführen, sodass eine Fehlbearbeitung des Kabels verhinderbar ist. Damit ist die Bearbeitungssicherheit in der Kabelbearbeitungsvorrichtung massgeblich erhöht und die Wahrscheinlichkeit der Produktion von Ausschuss weiter reduziert.

Gemäss eines erfindungsgemässen computerimplementierten Verfahren zum Konfigurieren einer erfindungsgemässen Kabelbearbeitungsvorrichtung, wobei die Kabelbearbeitungsvorrichtung ein Positionieren der ersten Werkzeugmontage und des ersten Kabelanschlags automatisch ausführt, werden die Werkzeugmontage und der erste Kabelanschlag mithilfe einer Steuereinrichtung vertikal positioniert, wobei das Positionieren abhängig von einer Kabelförderrichtung einer Kabelbeförderungseinrichtung erfolgt.

Beim automatischen Konfigurieren bzw. Einstellen der Arbeitsstellung der Werkzeugmontage und der Arbeitsstellung des ersten Kabelanschlags übermittelt die Steuereinrichtung hinterlegte Steuerbefehle an die Positioniereinrichtung der Werkzeugmontage und an die Positioniereinrichtung des ersten Kabelanschlags. Die vertikale Positionierung der Werkzeugmontage sowie das vertikale Positionieren des ersten Kabelanschlags verbessert das Einstellen der Kabelbearbeitungsvorrichtung, sodass die Qualität des Kabelendprodukts bzw. Kabelzwischenprodukts erhöht wird und die Produktivität mit der Kabelbearbeitungsvorrichtung, ohne Zutun eines Bedieners, signifikant erhöht wird (Testversuche ergaben überraschenderweise ca. 500 Kabelendprodukte mit signifikant hoher Qualität zusätzlich, pro Stunde). Gleichzeitig ist der Ausschuss an schadhaften Kabelendprodukten sowie Kabelzwischenprodukten signifikant reduzierbar.

Insbesondere werden die Werkzeugmontage und der erste Kabelanschlag unabhängig voneinander vertikal positioniert. Damit kann beispielsweise bei einem Werkzeugwechsel an der Kabelbearbeitungsvorrichtung und einem unverändert zu bearbeitenden Kabel nur die Position der Arbeitsstellung der Werkzeugmontage eingestellt, sodass beispielsweise die Herstellung der Kabelendprodukte sowie Kabelzwischenprodukte einfach und schneller wieder gestartet wird. Damit wird die Kabelbearbeitungsprozesszeit bzw. die Einrichtzeit der Kabelbearbeitungsvorrichtung wesentlich verkürzt.

Bevorzugt erfolgt das Positionieren der Werkzeugmontage und des ersten Kabelanschlags, insbesondere in deren Arbeitsstellung, vor einem Kabelbearbeitungsschritt. Die Steuereinrichtung erkennt die aktuelle Position der Werkzeugmontage und des ersten Kabelanschlags und löst das Bewegen zumindest der Werkzeugmontage und/oder des ersten Kabelanschlages in deren Arbeitsstellungen aus, indem zumindest ein Steuerbefehl an den jeweiligen Positionierantrieb übermittelt wird.

Bevorzugterweise werden Sensordaten von einer ersten Positionssensorik erfasst und die Werkzeugmontage auf Basis der Sensordaten positioniert. Die Sensordaten werden an die Steuereinrichtung übermittelt, sodass die Steuereinrichtung mithilfe der Sensordaten ein korrektes und reproduzierbares Positionieren der Werkzeugmontage ausführen kann.

Alternativ oder ergänzend werden Sensordaten von der ersten Positionssensorik erfasst und der erste Kabelanschlag auf Basis der Sensordaten positioniert. Die Sensordaten werden an die Steuereinrichtung übermittelt, sodass die Steuereinrichtung mithilfe der Sensordaten ein korrektes und reproduzierbares Positionieren des ersten Kabelanschlags ausführen kann.

Alternativ oder ergänzend werden Sensordaten von einer zweiten Positionssensorik erfasst und der erste Kabelanschlag auf Basis der Sensordaten positioniert. Die Sensordaten werden an die Steuereinrichtung übermittelt, sodass die Steuereinrichtung mithilfe der Sensordaten ein korrektes und reproduzierbares Positionieren des ersten Kabelanschlags ausführen kann. Damit ist die Position des ersten Kabelanschlags unabhängig von der Position der Werkzeugmontage erfassbar und steuerbar bzw. einstellbar.

Vorzugsweise ruft die Steuereinrichtung Steuerdaten zum Positionieren der Werkzeugmontage aus einer Speichereinheit auf. Die Steuerdaten können dabei Steuerbefehle zum Positionieren der Werkzeugmontage in deren Arbeitsstellung umfassen. Die Steuereinrichtung umfasst eine Recheneinheit sowie eine Speichereinrichtung, wobei die Recheneinheit ausgebildet ist, die Steuerdaten von der Speichereinheit abzurufen und der Werkzeugmontage zuzuweisen.

Alternativ oder ergänzend ruft die Steuereinrichtung Steuerdaten zum Positionieren des ersten Kabelanschlags aus einer Speichereinheit ab. Die Steuerdaten können dabei Steuerbefehle zum Positionieren des ersten Kabelanschlags in dessen Arbeitsstellung umfassen. Die Recheneinheit ist ausgebildet, die Steuerdaten von der Speichereinheit abzurufen und dem ersten Kabelanschlag zuzuweisen.

Alternativ oder ergänzend ruft die Steuereinrichtung Steuerdaten zum Positionieren der Werkzeugmontage aus einer Datenbank ab. Dabei kann die Datenbank beispielsweise vorab mit Steuerdaten, beispielsweise von einem Bediener, nach zu bearbeitetem Kabeltyp und/oder Werkzeugtyp aufgefüllt werden. Alternativ oder ergänzend ruft die Steuereinrichtung Steuerdaten zum Positionieren des ersten Kabelanschlags aus einer Datenbank ab.

Bevorzugterweise erfolgt das Positionieren der Werkzeugmontage auf Basis von kabelspezifischen Daten. Damit ist die Arbeitsstellung der Werkzeugmontage auf das zu bearbeitende Kabel fehlerfrei einstellbar.

Alternativ oder ergänzend erfolgt das Positionieren des ersten Kabelanschlags auf Basis von kabelspezifischen Daten. Damit ist die Arbeitsstellung des ersten Kabelanschlags auf das zu bearbeitende Kabel fehlerfrei einstellbar.

Alternativ oder ergänzend erfolgt das Positionieren der Werkzeugmontage auf Basis von werkzeugspezifischen Daten. Damit ist die Arbeitsstellung der Werkzeugmontage auf das zu bearbeitende Kabel verbessert fehlerfrei einstellbar bzw. auf den Werkzeugtyp abstimmbar.

Alternativ oder ergänzend erfolgt das Positionieren des ersten Kabelanschlags auf Basis von werkzeugspezifischen Daten. Damit ist die Arbeitsstellung des ersten Kabelanschlags auf das zu bearbeitende Kabel verbessert fehlerfrei einstellbar bzw. auf den Werkzeugtyp abstimmbar.

Bevorzugt werden die kabelspezifischen Daten und/oder werkzeugspezifischen Daten von einer Detektionseinrichtung, wie hier vorliegend beschrieben, erfasst und an die Steuereinrichtung übermittelt. Damit kann beispielsweise ein Werkzeugwechsel an der Kabelbearbeitungsvorrichtung oder ein Kabeltypwechsel automatisch erfasst und erkannt werden, sodass ein schnelles reproduziertes Positionieren der Werkzeugmontage und/oder des ersten Kabelanschlags erfolgen kann.

Vorteilhaft erstellt die Steuereinrichtung zumindest einen Steuerbefehl auf Basis der erfassten kabelspezifischen Daten und/oder werkzeugspezifischen Daten und positioniert die Werkzeugmontage und/oder den ersten Kabelanschlag in deren Arbeitsstellung.

Weitere vorteilhafte Verfahrensschritte sind in den hier vorliegend beschriebenen Kabelbearbeitungsvorrichtungen offenbart.

Gemäss eines erfindungsgemässen computerimplementierten Verfahrens zum automatischen Bestimmen und Erzeugen von Steuerbefehlen und/oder Steuerdaten zum Steuern einer Kabelbearbeitungsvorrichtung mit einer Steuereinrichtung; mit einer ersten Werkzeugmontage; und mit einem ersten Kabelanschlag; insbesondere den hier vorliegend beschriebenen Kabelbearbeitungsvorrichtungen, welche ein Positionieren der ersten Werkzeugmontage und des ersten Kabelanschlags ausführen, wird zumindest ein Steuerdatensatz und/oder ein Steuerbefehl erzeugt und gespeichert.

Anhand des automatischen Bestimmens und Erzeugens von Steuerbefehlen und/oder Steuerdaten zum Steuern einer Kabelbearbeitungsvorrichtung in der Steuereinrichtung, insbesondere zum Steuern der Werkzeugmontage und des ersten Kabelanschlags, wird das vertikale Positionieren der Werkzeugmontage sowie das vertikale Positionieren des ersten Kabelanschlags automatisch abrufbar, sodass die Qualität des Kabelendprodukts bzw. Kabelzwischenprodukts erhöht wird und die Produktivität mit der Kabelbearbeitungsvorrichtung, ohne Zutun eines Bedieners, signifikant erhöht wird (Testversuche ergaben überraschenderweise ca. 500 Kabelendprodukte mit signifikant hoher Qualität zusätzlich, pro Stunde). Gleichzeitig ist der Ausschuss an schadhaften Kabelendprodukten sowie Kabelzwischenprodukten signifikant reduzierbar.

Insbesondere werden mehrere Steuerdatensätze und/oder Steuerbefehle erzeugt und gespeichert, welche vorteilhaft in der Speichereinheit der Steuereinrichtung und/oder Datenbank hinterlegbar sind. Beispielsweise kann die Datenbank von mehreren Kabelbearbeitungsvorrichtungen einfach und unabhängig abgerufen werden.

Weitere vorteilhafte Verfahrensschritte sind in den hier vorliegend beschrieben Kabelbearbeitungsvorrichtungen offenbart.

Ein erfindungsgemässes Computerprogrammprodukt umfasst Steuerbefehle und/oder Steuerdaten, die bei der Ausführung des Programms durch eine erfindungsgemässe Kabelbearbeitungsvorrichtung diese veranlassen, das erfindungsgemässen Verfahren zum automatischen Bestimmen und Erzeugen von Steuerbefehlen und/oder Steuerdaten auszuführen. Mithilfe des Computerprogrammprodukts können unterschiedliche Kabelbearbeitungsvorrichtungen, wie vorliegend beschrieben, reproduzierbar gesteuert und unabhängig voneinander gesteuert werden, wobei beispielsweise die Steuerbefehle und/oder Steuerdaten von allen im Netzwerk integrierten Kabelbearbeitungsvorrichtungen individuell erstellbar sind, sodass eine "Internet of Things" Applikation realisierbar ist.

Die Erfindung umfasst weiter ein computerlesbares Speichermedium, auf dem das erfindungsgemässe Computerprogramm gespeichert ist. Damit kann das Verfahren zum Konfigurieren einer Kabelbearbeitungsvorrichtung, wie hier vorliegend beschrieben, an Kabelbearbeitungsvorrichtungen ausgeführt werden, die eine Steuereinrichtung und eine Einrichtung zum Lesen der Steuerbefehle und/oder Steuerdaten am Speichermedium umfassen. Damit ist eine beim Benutzer bereits vorhandene Kabelbearbeitungsvorrichtung nachrüstbar, sodass das Bearbeiten des Kabelendprodukts und/oder des Kabelzwischenprodukts, ohne Zutun des Benutzers, durchführbar ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erste Ausführungsform einer erfindungsgemässen Kabelbearbeitungsvorrichtung in einer Schnittansicht mit einer Kabelbeförderungseinrichtung in einer Seitenansicht,
- Fig. 2: die Kabelbearbeitungsvorrichtung nach Fig. 1 in einer ersten detaillierten Seitenansicht,
- Fig. 3: die Kabelbearbeitungsvorrichtung nach Fig. 1 in einer ersten detaillierten perspektivischen Ansicht,
- Fig. 4: die Kabelbearbeitungsvorrichtung nach Fig. 1 in einer weiteren detaillierten Seitenansicht,
- Fig. 5: die Kabelbearbeitungsvorrichtung nach Fig. 1 in einer weiteren detaillierten Seitenansicht,
- Fig. 6: die Kabelbearbeitungsvorrichtung nach Fig. 1 in einer weiteren detaillierten Seitenansicht,
- Fig. 7: die detaillierte Seitenansicht der Kabelbearbeitungsvorrichtung nach Fig. 6 in einer vereinfachten Seitenansicht als Prinzipdarstellung,
- Fig. 8: die Kabelbearbeitungsvorrichtung nach Fig. 1 in einer weiteren detaillierten Seitenansicht,
- Fig. 9: eine weitere Ausführungsform einer Kabelbeförderungseinrichtung für eine Kabelbearbeitungsvorrichtung gemäss Fig. 1 in einer perspektivischen Darstellung,
- Fig. 10: eine weitere Ausführungsform einer erfindungsgemässen Kabelbearbeitungsvorrichtung in einer weiteren Seitenansicht, und
- Fig. 11: ein erfindungsgemässes Verfahren in einem Flussdiagramm.

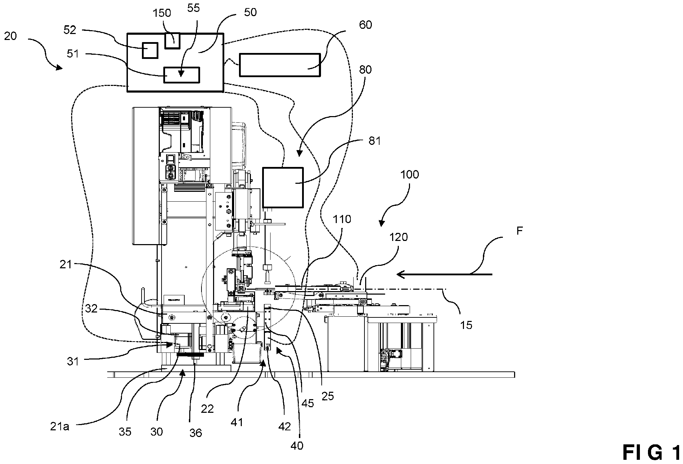

Die Fig. 1 bis Fig. 8 zeigen beispielhaft eine Crimpstation als Kabelbearbeitungsvorrichtung 20 zum Bearbeiten eines Kabels 15 bzw. zum Konfektionieren einer Kabelverbindung an einem Kabelende des Kabels 15. Die Kabelbearbeitungsvorrichtung 20 umfasst eine Grundstützstruktur 21 an der eine Basisstruktur 21a angeordnet ist sowie eine erste Positioniereinrichtung 30 mit einem ersten Positionierantrieb 35 zum vertikalen Positionieren einer Werkzeugmontage 22 relativ zu einer Kabelförderrichtung F einer Kabelbeförderungseinrichtung 100. Des Weiteren ist eine zweite Positioniereinrichtung 40 mit einem zweiten Positionierantrieb 45 zum vertikalen Positionieren eines ersten Kabelanschlags 25 relativ zur Kabelförderrichtung F der Kabelbeförderungseinrichtung 100 vorhanden. Die Kabelförderungseinrichtung 100 weist einen in einer Kabelschwenkebene schwenkbaren Förderarm 110 auf, sodass das Kabel 15 von einer ersten Bearbeitungsstation zur vorliegend beschriebenen Kabelbearbeitungsvorrichtung 20 in der Kabelschwenkebene horizontal schwenkbar ist. Die Kabelbeförderungseinrichtung 100 weist einen Förderantrieb 120 mit Förderriemen 121 zum Fördern des Kabels 15 in Kabelförderrichtung F sowie gegen die Kabelförderrichtung F auf. Die Förderriemen 121 sind zueinander bewegbar und mit einem Schliessdruck beaufschlagbar, um das Kabel 15 einzuklemmen und zu fördern. Die Kabelschwenkebene ist im Wesentlichen parallel zur Kabelförderrichtung F ausgerichtet.

Der erste Positionierantrieb 35 ist ein Stellantrieb, der mit einer Steuereinrichtung 50 elektrisch verbunden ist. Der erste Positionierantrieb 35 umfasst eine Spindel als Stelleinheit 36 zum Positionieren der Werkzeugmontage 22 in deren Arbeitsstellung, und von dieser weg. Die Werkzeugmontage ist beweglich an der Spindel angeordnet. Die Spindel ist mit der Grundstützstruktur 21 und der Basisstruktur 21a verbunden. Das Antreiben der Spindel bewirkt ein vertikales Positionieren der Werkzeugmontage 22. Dafür empfängt der Stellantrieb zumindest einen Steuerbefehl als erste Steuerdaten von der Steuereinrichtung 50.

Die erste Positioniereinrichtung 30 umfasst eine erste Positionssensorik 31 zum Erfassen zumindest der vertikalen Position der Werkzeugmontage 22, wobei die erste Positionssensorik 31 am ersten Positionierantrieb 35 angeordnet ist. Die erste Positionssensorik ist ein Drehsensor 32, welcher die vertikale Position der Werkzeugmontage 22 an der Kabelbearbeitungsvorrichtung 20 einfach erfasst.

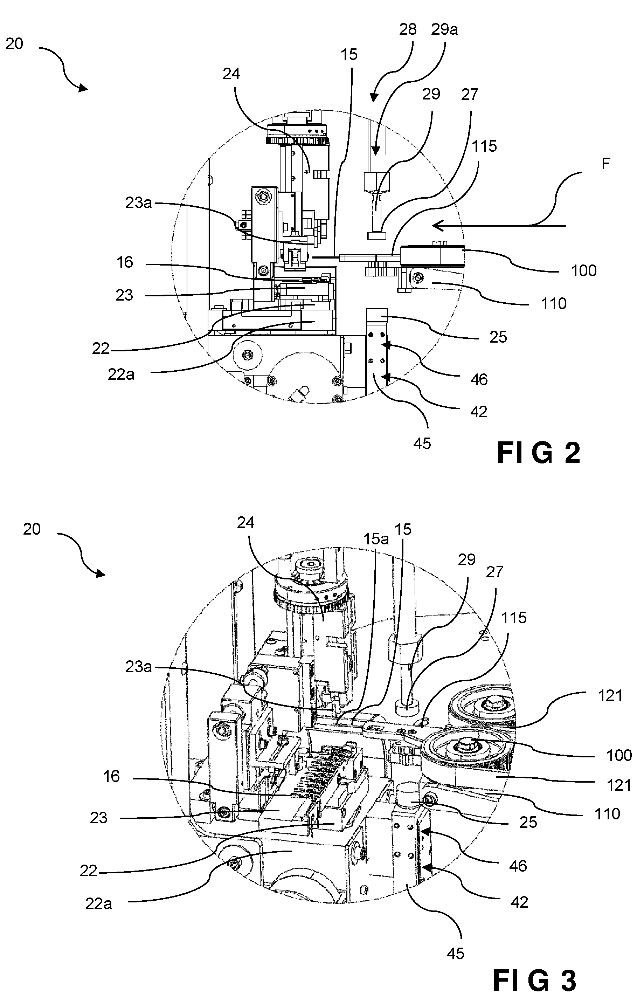

Wie in Fig. 2 und Fig. 3 detailliert dargestellt, ist die Werkzeugmontage 22 ein Amboss 22a der Crimpstation. Der Amboss 22a weist ein erstes Crimpwerkzeug 23 auf, welches während des Bearbeitungsprozesses ortsfest an der Werkzeugmontage 22 in der Kabelbearbeitungsvorrichtung 20 gehalten wird. Am Amboss 22a sind mehrere Steckerelemente 16 angeordnet. Das zu bearbeitende Kabel 15 wird beim Fördern typischerweise entlang der Kabelförderrichtung F der Kabelbeförderungseinrichtung 100 bewegt. Dabei wird das zu bearbeitende Kabel in einem als Wechselteil exakt zum Kabelaussendurchmesser ausgelegten Führungsröhrchen 115 zur Werkzeugmontage 22 bzw. zum Steckerelement 16 zugeführt. Die Crimpstation weist ein zweites Crimpwerkzeug 23a auf. Das zweite Crimpwerkzeug 23a ist an einem Crimpantrieb 24 angeordnet und vertikal bewegbar. Während des Bearbeitungsprozesses wird beim Crimpen das zweite Crimpwerkzeug 23a motorisch derart an das erste Crimpwerkzeug 23 zugeführt bzw. damit in Wirkverbindung gebracht, dass eine Crimpverbindung bzw. Kabelverbindung zwischen einem der Steckerelemente 16 und dem Kabelleiter 15a des Kabels 15 herstellbar bzw. konfektionierbar ist. Dabei muss der Kabelleiter 15a des Kabels 15 mit dem Steckerelement 16 derart genau überlappend verbunden werden, dass eine kontaktsichere Crimpverbindung geschaffen wird.

Der vorliegend beschriebene Kabelanschlag 25 ist mithilfe des zweiten Positionierantriebs 45 der zweiten Positioniereinrichtung 40 vertikal und unabhängig von der Werkzeugmontage 22 motorisch in dessen Arbeitsstellung, und von dieser weg, positionierbar. Der erste Kabelanschlag 25 wird entlang einer Führungseinrichtung 26 vertikal geführt. Der zweite Positionierantrieb 45 ist als Stellantrieb ausgebildet und umfasst eine Spindel als Stelleinheit 46 zum Positionieren des ersten Kabelanschlags 25. Der zweite Positionierantrieb 45 ist ortsfest an der Werkzeugmontage 22 angeordnet und ist mit dieser vertikal mitbewegt. Es ist eine zweite Positionssensorik 41 zum Erfassen der vertikalen Position des ersten Kabelanschlags 25 vorhanden, wobei die zweite Positionssensorik 41 am zweiten Positionierantrieb 45 angeordnet ist. Die zweite Positionssensorik 41 ist ein Drehsensor 42, welcher die vertikale Position bzw. Stellung des Kabelanschlags 25 an der Kabelbearbeitungsvorrichtung 20 erfasst.

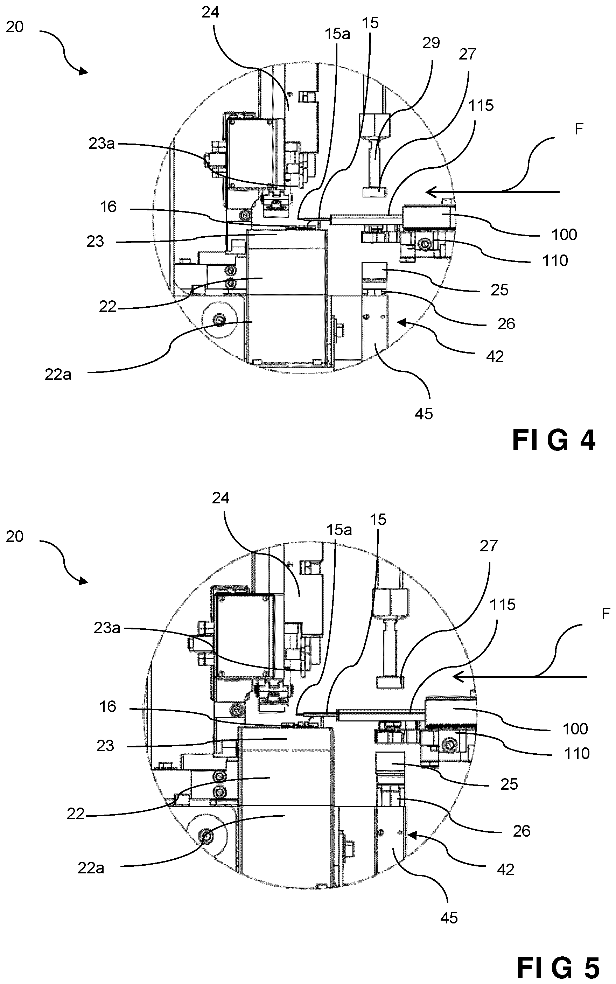

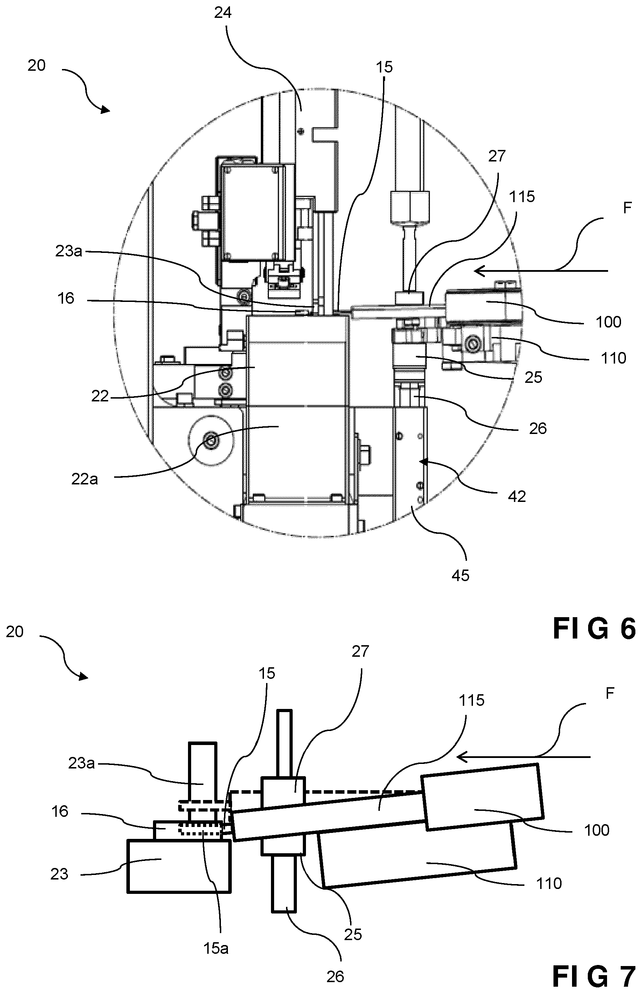

Der erste Kabelanschlag 25 ist als Gegenlager ausgebildet, um den Förderarm 110 und somit das Kabel 15 und/oder das Führungsröhrchen 115 derart zu fixieren bzw. zu stützen, dass ein reproduzierbarer Kabelbearbeitungsschritt mit der Kabelbearbeitungsvorrichtung 20 ausführbar ist, ohne dass das Kabel 15 unerwünscht deformiert wird bzw. unerwünscht abknickt - siehe insbesondere Fig. 5 und Fig. 6.

Am Crimpantrieb 24 ist ein weiterer Kabelanschlag 27 und eine weitere Positioniereinrichtung 28 angeordnet. Der weitere Kabelanschlag 27 ist gegenüberliegend zum ersten Kabelanschlag 25 angeordnet und drückt auf das als Wechselteil passend für das Kabel 15 ausgelegte Führungsröhrchen 115 um das Kabel 15 zu fixieren, wenn der Bearbeitungsprozess ausgeführt wird. Die weitere Positioniereinrichtung 28 weist eine Führungsschiene 29 und eine Federeinheit 29a auf, sodass der weitere Kabelanschlag 27 gefedert gelagert ist, um das Führungsröhrchen 115 mit dem darin geführten Kabel 15 nicht zu beschädigen.

Die Kabelbearbeitungsvorrichtung 20 weist eine Steuereinrichtung 50 auf. Die Steuereinrichtung 50 ist mit dem ersten Positionierantrieb 35 zum Austausch von ersten Steuerdaten und mit dem zweiten Positionierantrieb 45 zum Austausch von zweiten Steuerdaten verbunden (Datenleitungen sind in Fig. 1 als unterbrochene Linien dargestellt). Die Steuereinrichtung 50 ist mit der ersten Positionssensorik 31 und mit der zweiten Positionssensorik 41 elektrisch verbunden um die erfassten Sensordaten bzw. Positionsdaten für die Werkzeugmontage 22 sowie für den ersten Kabelanschlag 25 zu erhalten.

Die Steuereinrichtung 50 ist dazu ausgelegt, bei Erreichen der Arbeitsstellung der Werkzeugmontage 22 sowie bei Erreichen der Arbeitsstellung des Kabelanschlags 25 zumindest das zweite Crimpwerkzeug 23a der Kabelbearbeitungsvorrichtung 20 zu aktivieren, um einen Kabelbearbeitungsschritt auszuführen. Die Steuereinrichtung 50 weist eine Recheneinheit 51 auf, um die Sensordaten der beiden Positionssensoriken 31 bzw. 41 weiter zu verarbeiten. Dabei ist die Recheneinheit 51 ausgebildet, um aus den Sensordaten der ersten Positionssensorik 31 zumindest einen Steuerbefehl zum Positionieren der ersten Werkzeugmontage 22 zu erstellen. Weiters ist die Recheneinheit 51 ausgebildet, um aus den Sensordaten der zweiten Positionssensorik 41 zumindest einen weiteren Steuerbefehl zum Positionieren des ersten Kabelanschlags25 zu erstellen. Bei Erreichen der Arbeitsstellung des ersten Kabelanschlags 25, also wenn mittels der zweiten Positionssensorik 41 festgestellt wird, dass der erste Kabelanschlag 25 in die Arbeitsstellung gebracht wird sowie bei Erreichen der Arbeitsstellung der Werkzeugmontage 22, also wenn mittels der ersten Positionssensorik 31 festgestellt wird, dass die Werkzeugmontage 22 in die Arbeitsstellung gebracht wurde, kann das Schwenken des Förderarms 110 der Kabelförderungseinrichtung 100 deaktiviert werden und der Kabelbearbeitungsschritt gestartet werden.

Die Steuereinrichtung 50 weist eine Speichereinheit 52 auf, wobei die Steuereinrichtung 50 ausgebildet ist, um zumindest einen Steuerbefehl aus der zumindest einen Speichereinheit 51 abzurufen, um zumindest einen der beiden Positionierantriebe 35 bzw. 45 anzutreiben. Der Steuerbefehl kann dabei Positionsdaten für die Arbeitsstellung der Werkzeugmontage 22 und/oder des ersten Kabelanschlags 25 umfassen. Zusätzlich ist zumindest eine Datenbank 60 vorhanden, welche mit der Steuereinrichtung 50 verbunden ist, wobei die Steuereinrichtung 50 ausgebildet ist, um zumindest einen Steuerbefehl aus der zumindest einen Datenbank 60 abzurufen, um zumindest einen der beiden Positionierantriebe 35 bzw. 45 anzutreiben. Die Datenbank 60 ist beispielsweise als dezentrale Cloud ausgebildet, sodass unterschiedliche Kabelbearbeitungsvorrichtungen einfach auf die Steuerbefehle oder Steuerdatensätze zugreifen können.

Die Kabelbearbeitungseinrichtung 20 umfasst eine Detektionseinrichtung 80 zum Erfassen von kabelspezifischen Daten. Die Detektionseinrichtung 80 umfasst eine berührungslose Scannereinheit 81, sodass das zu bearbeitende Kabel 15 einfach erkennbar ist und kabelspezifische Daten ohne Zutun eines Benutzers erkannt werden. Die kabelspezifischen Daten umfassen insbesondere den strukturellen Aufbau des zu bearbeitenden Kabels, wie nicht abschliessend aufgezählt der Kabeldurchmesser, der Aufbau bzw. das Material des Kabelleiters, die Anzahl der einzelnen Kabelleiter im Kabel, der Kabeltyp, die Kabelleiterlänge, den Aufbau und/oder das Material der Kabelisolierung bzw. Kabelummantelung, usw.

Des Weiteren erfasst die Scannereinheit 81 werkzeugspezifische Daten zu den Crimpwerkzeugen 23, 23a, wobei die werkzeugspezifischen Daten nicht abschliessend aufgezählt den Aufbau, die Dimension, das Material der Crimpwerkzeuge 23, 23a an der Kabelbearbeitungsvorrichtung 20 umfasst.

Die Detektionseinrichtung 80 ist mit der Steuereinrichtung 50 zum Austausch der kabelspezifischen Daten und/oder der werkzeugspezifischen Daten elektrisch verbunden. Die Recheneinheit 51 der Steuereinrichtung 50 ist ausgebildet, die kabelspezifischen Daten und/oder werkzeugspezifischen Daten von der Detektionseinrichtung 80 in zumindest einen Steuerbefehl für die Arbeitsstellung der Werkzeugmontage 22 umzuwandeln, um die Werkzeugmontage 22 entsprechend dem zu bearbeitenden Kabel 15 zu positionieren. Des Weiteren ist die Steuereinrichtung 50 ausgebildet, die kabelspezifischen Daten und/oder werkzeugspezifischen Daten von der Detektionseinrichtung 80 in zumindest einen Steuerbefehl für die Arbeitsstellung des ersten Kabelanschlags 25 umzuwandeln, um den ersten Kabelanschlag 25 entsprechend dem zu bearbeitenden Kabel 15 zu positionieren. Die Steuereinrichtung 50 ist ausgebildet, um die mit der Detektionseinrichtung 80 erfassten kabelspezifischen Daten und/oder werkzeugspezifischen Daten mit dazu gehörenden Steuerbefehlen in der Speichereinheit 51 und/oder in der Datenbank 60 zu vergleichen, um die Werkzeugmontage 22 und/oder den ersten Kabelanschlag 25 entsprechend dem zu bearbeitenden Kabel 15 zu positionieren bzw. in deren Arbeitsstellungen zu bewegen.

Die Steuereinrichtung 50 ist des Weiteren ausgebildet, um beim Erfassen von neuen kabelspezifischen Daten und/oder werkzeugspezifischen Daten mit der Detektionseinrichtung 80 eine Überprüfung der Kompatibilität der an der Kabelbearbeitungsvorrichtung 20 angeordneten Crimpwerkzeuge 23 bzw. 23a mit dem zu bearbeiteten Kabels 15 durchzuführen, sodass eine Fehlbearbeitung des Kabels 15 verhinderbar ist. Zusätzlich wird überprüft, ob das Führungsröhrchen 115 zum Kabeldurchmesser des Kabels 15 passt und mit welchem Schliessdruck die Förderriemen 121 der Kabelbeförderungseinrichtung 100 das zu fördernde Kabel umschliessen sollen. Dazu vergleicht die Recheneinheit 51 die kabelspezifischen Daten und die werkzeugspezifischen Daten von der Detektionseinrichtung 80 sowie die in der Speichereinheit 51 bzw. der Datenbank 60 hinterlegten kabelspezifischen Daten und werkzeugspezifischen Daten, um gegebenenfalls bei einer Unstimmigkeit im Vergleich einen Alarm auszulösen, um den Kabelbearbeitungsschritt zu verhindern.

Anhand den Fig. 1 bis Fig. 8 wird nachfolgend ein Verfahren beschrieben, welches ein computerimplementiertes Verfahren zum Konfigurieren einer Kabelbearbeitungsvorrichtung 20 mit einer Steuereinrichtung 50 sein kann, wobei das Verfahren zum Positionieren der Werkzeugmontage 22 und des ersten Kabelanschlags 25 automatisch ausgeführt wird, wobei die Werkzeugmontage 22 und der erste Kabelanschlag 25 mithilfe der Steuereinrichtung 50 vertikal positioniert werden. Dabei erfolgt das Positionieren abhängig von der Position einer Kabelförderrichtung F einer Kabelbeförderungseinrichtung 100. Die Werkzeugmontage 22 und der erste Kabelanschlag 25 werden unabhängig voneinander vertikal positioniert.

Vor dem Bearbeiten des Kabels 15 befinden sich die Werkzeugmontage 22 und der erste Kabelanschlag 25 in einer Position, welche von deren Arbeitsstellung derart entfernt sind, dass der Förderarm 110 der Kabelbeförderungseinrichtung 100 ungehindert zur Kabelbearbeitungsvorrichtung 20 in der Kabelschenkebene schwenken kann - siehe Fig. 2 bzw. Fig. 3. Die Kabelschwenkebene ist jene Ebene, die beim Fördern des Kabels 15 parallel zur Kabelförderrichtung F ausgerichtet ist.

Die Steuereinrichtung 50 ist bereits vorab derart konfiguriert, dass der Kabeltyp des zu bearbeitenden Kabels 15 sowie die in der Crimpstation angeordneten Crimpwerkzeuge 23 und 23a bekannt sind. Damit ruft die Steuereinrichtung 50 die Steuerbefehle aus der Speichereinheit 52 oder der Datenbank 60 ab, sodass der Recheneinheit 51 der Steuereinrichtung 50 bereits die jeweiligen Steuerbefehle zur Arbeitsstellung der Werkzeugmontage 22 und des ersten Kabelanschlags 25 bekannt sind.

In einem ersten Schritt werden Sensordaten von der ersten Positionssensorik 31 und der zweiten Positionssensorik 41 erfasst und an die Steuereinrichtung 50 übermittelt, sodass die Steuereinrichtung 50 mithilfe der Sensordaten die aktuelle Position der Werkzeugmontage 22 sowie die aktuelle Position des ersten Kabelanschlags 25 bestimmen kann.

In einem weiteren Schritt erhält der erste Positionierantrieb 35 den passenden Steuerbefehl von der Steuereinrichtung 50, sodass die Werkzeugmontage 22 in deren Arbeitsstellung positioniert wird - siehe Fig. 4. Das an der Werkzeugmontage 22 angeordnete Steckerelement 16 wird exakt unterhalb des Kabelleiters 15a des Kabels 15 positioniert, wobei gegebenenfalls das Kabel 15 entlang der Kabelförderrichtung F mithilfe des Förderantriebs 120 justiert wird. Das Positionieren der Werkzeugmontage 22 in deren Arbeitsstellung erfolgt auf Basis der kabelspezifischen Daten und werkzeugspezifischen Daten.

In einem weiteren Schritt erhält der zweite Positionierantrieb 45 den passenden Steuerbefehl von der Steuereinrichtung 50, sodass der erste Kabelanschlag 25 in dessen Arbeitsstellung positioniert wird - siehe Fig. 5. Dabei wird der erste Kabelanschlag 25 an das Führungsröhrchen 115 bzw. an den Förderarm 110 angenähert und benachbart dazu positioniert.

Das Positionieren des ersten Kabelanschlags 25 in dessen Arbeitsstellung erfolgt auf Basis der kabelspezifischen Daten und werkzeugspezifischen Daten. Der vertikale Abstand zwischen dem Kabel 15 und dem Steckerelement 16 ist dabei in etwa gleich gross, wie der vertikale Abstand zwischen dem ersten Kabelanschlag 25 und dem Förderarm 110.

Anschliessend erfolgt der eigentlich Kabelbearbeitungsschritt, wobei das zweite Crimpwerkzeug 23a mithilfe des Crimpantriebs 24 hin zum ersten Crimpwerkzeug 23 vertikal bewegt wird. Dabei wird der am Crimpantrieb 24 angeordnete weitere Kabelanschlag 27 vertikal mitbewegt und drückt auf das Führungsröhrchen 115, um das darin geführte Kabel 15 in Richtung zum ersten Kabelanschlag 25 zu drücken und zu fixieren, wenn der Bearbeitungsprozess ausgeführt wird. Um ein Überschwingen des massebehafteten Führungsröhrchens 115 zu verhindern, dient der erste Kabelanschlag 25 als Gegenlager, sodass ein Abknicken des Kabels 15 bzw. des Kabelleiters 15a am Kabel 15 verhindert wird - siehe Fig. 6 und 7. Gleichzeitig wird das Kabel 15 vom zweiten Crimpwerkzeug 23 in den entsprechenden Crimpverbindungsabschnitt am Steckerelement 16 gedrückt und die formschlüssige Verbindung erstellt. Wie in Fig. 7 im Detail gezeigt, wird beim Zufahren des ersten Crimpwerkzeugs 23a zum zweiten Crimpwerkzeug 23 das Führungsröhrchen 115 mitsamt der Kabelbeförderungseinrichtung 100 und dem Förderarm 110 durch den weiteren Kabelanschlag 27 aus der horizontalen Kabelschwenkebene um wenige Zehntel-Winkelgrade (0.1° bis max. 1°) abgenickt. Dabei wird das abisolierte vordere Leiterende des Kabelleiters 15a des Kabels 15 in das zweite Crimpwerkzeug 23 exakt eingelegt. Das Führungsröhrchen 115 ist ein Wechselteil und seine Innenbohrung ist exakt auf den Aussendurchmesser der zu verarbeitenden Leitung/Kabel 15 ausgelegt. Das Kabel 15 wird deshalb von diesem Führungsröhrchen 115 rundum so gehalten, dass es radial nicht ausknicken kann. In axialer Richtung wird das Kabel 15 durch die Kabelbeförderungseinrichtung 100, in welcher das Kabel 15 zwischen den Förderriemen 121 geklemmt ist, exakt positioniert und gehalten (siehe Fig. 3). Der Abnickwinkel des Führungsröhrchen 115 mitsamt der Kabelbeförderungseinrichtung 100 und dem Förderarm 110 durch den weiteren Kabelanschlag 27 aus der horizontalen Kabelschwenkebene beträgt wenige Winkelgrade. Fig. 7 zeigt eine Prinzipdarstellung, in welcher der Abnickwinkel wesentlich grösser dargestellt ist. Resultierend werden ein Kabelprodukt bzw. ein Kabelzwischenprodukt mit hoher Qualität produziert.

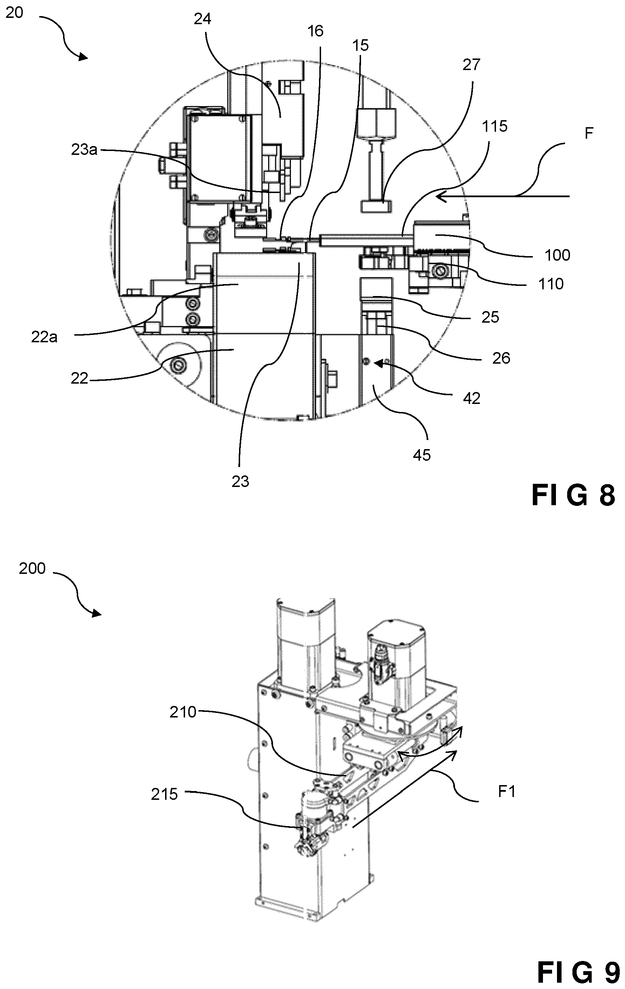

Anschliessend wird das zweite Crimpwerkzeug 23a sowie der weitere Kabelanschlag 27 mithilfe des Crimpantriebs 24 vertikal in deren Ausgangsstellung bewegt, sodass das Kabel 15 wieder parallel zur Kabelschwenkebene der Kabelförderungseinrichtung 100 ausgerichtet ist - siehe Fig. 8.

In einem alternativen Verfahren zum zuvor offenbarten Verfahren zum Konfigurieren einer Kabelbearbeitungsvorrichtung 20 werden die zuvor genannten Verfahrensschritte ausgeführt, wobei nun die Steuereinrichtung 50 nicht vorab konfiguriert ist. Der Kabeltyp des zu bearbeitenden Kabels 15 sowie die in der Crimpstation angeordneten Crimpwerkzeuge 23 und 23a sind nicht bekannt und werden von der Scannereinheit 81 der Detektionseinrichtung 80 erkannt. Die Scannereinheit 81 scannt beispielsweise einen QR-Code, welcher am Kabel 15 angeordnet ist und erkennt somit die kabelspezifischen Daten des Kabels 15. Des Weiteren scannt die Scannereinheit 81 beispielsweise einen Barcode, welcher an Crimpwerkzeug 23a angeordnet ist, und erkennt somit die werkzeugspezifischen Daten des Crimpwerkzeugs 23a.

Die kabelspezifischen Daten und/oder werkzeugspezifischen Daten werden von der Detektionseinrichtung 80 an die Steuereinrichtung 50 übermittelt (Datenleitungen sind als unterbrochene Linien dargestellt). Die Steuereinrichtung 50 wandelt die kabelspezifischen Daten und/oder werkzeugspezifischen Daten von der Detektionseinrichtung 80 in zumindest einen Steuerbefehl für die Arbeitsstellung der Werkzeugmontage 22 um, sodass die Werkzeugmontage 22 entsprechend dem zu bearbeitenden Kabel 15 positioniert wird. Des Weiteren wandelt die Steuereinrichtung50 die kabelspezifischen Daten und/oder werkzeugspezifischen Daten von der Detektionseinrichtung 80 in zumindest einen Steuerbefehl für die Arbeitsstellung des ersten Kabelanschlags 25 um, sodass der erste Kabelanschlag 25 entsprechend dem zu bearbeitenden Kabel 15 positioniert wird.

Fig. 9 zeigt eine weitere Kabelbeförderungseinrichtung 200 mit einer Kabelförderrichtung F1. Die Kabelförderungseinrichtung 200 weist einen in einer Kabelschwenkebene schwenkbaren Förderarm 210 mit einer Greifereinrichtung 215 zum Greifen des Kabels 15 auf, sodass das Kabel 15 zu einer wie vorliegend beschriebenen Kabelbearbeitungsvorrichtung 20 in der Kabelschwenkebene horizontal schwenkbar ist. Die Kabelförderrichtung F1 befindet sich typischerweise auf der gleichen horizontalen Höhe wie die Kabelförderrichtung F der Kabelbeförderungseinrichtung 100. Während des Kabelbearbeitungsschritts drückt der zweite Kabelanschlag 27 auf die Greifereinrichtung 215, um das darin geführte Kabel 15 vertikal in Richtung zum ersten Kabelanschlag 25 zu drücken und zu fixieren. Diese Kabelbeförderungseinrichtung 200 wird beispielsweise zum Bearbeiten des nachlaufenden Endes des Kabel 15 verwendet.

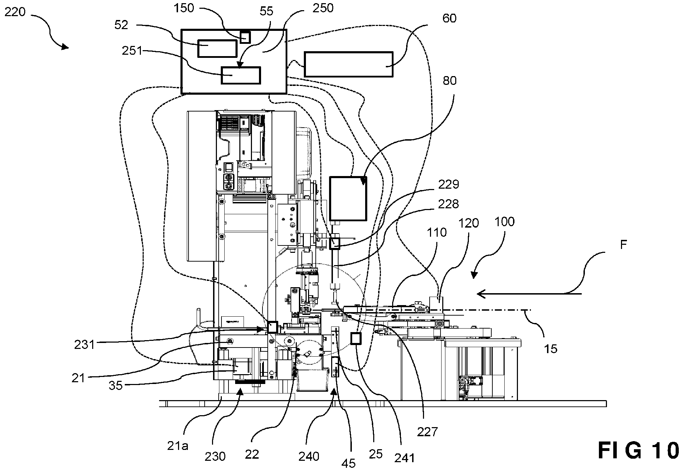

Die Fig. 10 zeigt eine weitere Ausführungsform der Crimpstation zum Konfektionieren einer Kabelverbindung an einem Kabelende des Kabels 15 als Kabelbearbeitungsvorrichtung 220 zum Bearbeiten eines Kabels 15. Diese Kabelbearbeitungsvorrichtung 220 weist im Wesentlichen die gleichen funktionellen und strukturellen Merkmale der Kabelbearbeitungsvorrichtung 20 auf, wie in den Fig. 1 bis Fig. 8 beschrieben.

Die Kabelbearbeitungseinrichtung 220 weist als erste und zweite Positionssensorik jeweils einen Positionssensor 231 bzw. 241 auf. Der erste Positionssensor 231 ist im Bereich der Werkzeugmontage 22 angeordnet. Der erste Positionssensor 231 ist beabstandet von, und benachbart zur ersten Positioniereinrichtung 230 der Werkzeugmontage 22 angeordnet und kann beispielsweise ein optischer Sensor, wie beispielsweise eine Laserschranke odgl., sein. Der erste Positionssensor 231 ist mit der Steuereinrichtung 250 zur Übergabe von Sensordaten elektrisch verbunden.

Der zweite Positionssensor 241 ist im Bereich des ersten Kabelanschlags 25 angeordnet. Der zweite Positionssensor 241 ist beabstandet von, und benachbart zur zweiten Positioniereinrichtung 240 des ersten Kabelanschlags 25 angeordnet und kann beispielsweise ein optischer Sensor sein. Der zweite Positionssensor 241 ist mit der Steuereinrichtung 250 zur Übergabe von Sensordaten elektrisch verbunden.

Die Positioniereinrichtungen 230 bzw. 240 sind Servomotoren und mit der Steuereinrichtung 250 zum Austausch von Steuerbefehlen verbunden.

Die Recheneinheit 251 der Steuereinrichtung 250 ist ausgebildet, um aus den Sensordaten der erste Positionssensor 231 zumindest einen Steuerbefehl zum Positionieren der ersten Werkzeugmontage 22 zu erstellen. Die Recheneinheit 251 der Steuereinrichtung 250 ist des Weiteren ausgebildet, um aus den Sensordaten des zweiten Positionssensors 241 zumindest einen Steuerbefehl zum Positionieren des ersten Kabelanschlags 25 zu erstellen.

Der weiterer Kabelanschlag 227 weist eine weitere Positioniereinrichtung 228 auf, wobei die weitere Positioniereinrichtung 228 insbesondere einen weiteren Positionierantrieb 229 zum zumindest vertikalen Positionieren des weiteren Kabelanschlags 227 aufweist. Der weitere Kabelanschlag 227 ist gegenüberliegend zum ersten Kabelanschlag 25 angeordnet und drückt, wie zuvor beschrieben, auf das Führungsröhrchen 115 um das darin geführte Kabel 15 zu fixieren, wenn der Bearbeitungsprozess ausgeführt wird. Der weitere Positionierantrieb 229 ist mit der Steuereinrichtung 250 zum Austausch der Positionsdaten der Arbeitsstellung des weiteren Kabelanschlags 227 verbunden.

Die zuvor mithilfe der Fig. 2 bis Fig. 8 beschriebenen Verfahren sind auch mit der Kabelbearbeitungsvorrichtung 220 ausführbar.

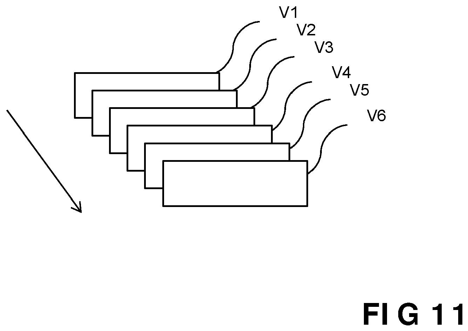

Fig. 11 zeigt ein Flussdiagramm und stellt ein computerimplementiertes Verfahren dar zum automatischen Bestimmen und Erzeugen von Steuerbefehlen und/oder Steuerdaten zum Steuern der Kabelbearbeitungsvorrichtung 20 oder der Kabelbearbeitungsvorrichtung 220 mit einer Steuereinrichtung 50 bzw. 250, welche ein Verfahren zum Positionieren einer Werkzeugmontage 22 und eines ersten Kabelanschlags 25 ausführt, wobei ein Steuerdatensatz und/oder ein Steuerbefehl erzeugt und gespeichert wird.

Die kabelspezifischen Daten und/oder werkzeugspezifischen Daten werden von der Detektionseinrichtung 80 erfasst und an die Steuereinrichtung 50 übermittelt, wie zuvor beschrieben (Schritt V1). Die Steuereinrichtung 50 wandelt die kabelspezifischen Daten und/oder werkzeugspezifischen Daten von der Detektionseinrichtung 80 in zumindest einen Steuerbefehl für die Arbeitsstellung der Werkzeugmontage 22 um (Schritt V2), sodass die Werkzeugmontage 22 entsprechend dem zu bearbeitenden Kabel 15 positioniert wird (Schritt V3). Des Weiteren wandelt die Steuereinrichtung 50 die kabelspezifischen Daten und/oder werkzeugspezifischen Daten von der Detektionseinrichtung 80 in zumindest einen Steuerbefehl für die Arbeitsstellung des ersten Kabelanschlags 25 um (Schritt V4), sodass der erste Kabelanschlag 25 entsprechend dem zu bearbeitenden Kabel 15 positioniert wird (Schritt V5).

Die dadurch erzeugten Steuerdatensätze und/oder Steuerbefehle werden in der Speichereinheit 51 der Steuereinrichtung 50 und/oder Datenbank 60 gespeichert (Schritt V6). Die Datenbank ist beispielsweise als dezentrale Cloud ausgebildet und mit Steuereinrichtungen unterschiedlicher Kabelbearbeitungsvorrichtungen 20 bzw. 220 vernetzt, um die erstellten Steuerdaten und/oder Steuerbefehle auszutauschen.

Weiters ist ein Computerprogrammprodukt 55 in der Steuereinrichtung 50 vorhanden, das Steuerbefehle und/oder Steuerdaten umfasst, die bei der Ausführung des Programms durch einen Recheneinheit 51 diese veranlassen, das Verfahren/die Schritte des Verfahrens zum Konfigurieren einer Kabelbearbeitungsvorrichtung 20 bzw. der Kabelbearbeitungsvorrichtung 220 oder des Verfahrens zum automatischen Bestimmen und Erzeugen von Steuerbefehlen und/oder Steuerdaten auszuführen.

Weiters ist ein computerlesbares Speichermedium 150 vorhanden, welches mehrere Steuerbefehle und/oder Steuerdaten umfasst, die bei der Ausführung durch die Recheneinheit 51 eine Steuereinrichtung 50 veranlassen, das Verfahren bzw. die Schritte des zuvor genannten Verfahrens zum Konfigurieren einer Kabelbearbeitungsvorrichtung 20 oder Kabelbearbeitungsvorrichtung 220 auszuführen.

**Bezugszeichenliste**

| | | | |
|---|---|---|---|
| 15 | Kabel | 15a | Kabelleiter |
| 16 | Steckerelement | | |
| 20 | Kabelbearbeitungsvorrichtung | 21 | Grundstützstruktur |
| 21a | Basisstruktur | 22 | Werkzeugmontage |
| 22a | Amboss | 23 | erstes Crimpwerkzeug |
| 23a | zweites Crimpwerkzeug | 24 | Crimpantrieb |
| 25 | erster Kabelanschlag | 26 | Führungseinrichtung |
| 27 | weiterer Kabelanschlag | 28 | Positioniereinrichtung von 27 |
| 29 | Führungsschiene | 29a | Federeinheit |
| 30 | erste Positioniereinrichtung | 31 | erste Positionssensorik |
| 32 | Drehsensor | | |
| 35 | Positionierantrieb | 36 | Stelleinheit |
| 40 | zweite Positioniereinrichtung | 41 | zweite Positionssensorik |
| 42 | Drehsensor | | |
| 45 | Positionierantrieb | 46 | Stelleinheit |
| 50 | Steuereinrichtung | 51 | Recheneinheit |
| 52 | Speichereinheit | | |
| 55 | Computerprogrammprodukt | 60 | Datenbank |
| 80 | Detektionseinrichtung | 81 | Scannereinheit |
| 100 | Kabelbeförderungseinrichtung | 110 | Förderarm |
| 115 | Führungsröhrchen | 120 | Förderantrieb |
| 150 | computerlesbares Speichermedium | | |
| 200 | Kabelbeförderungseinrichtung | 210 | Förderarm |
| 215 | Greifereinrichtung | | |
| 220 | Kabelbearbeitungsvorrichtung | | |
| 227 | weiterer Kabelanschlag | 228 | weitere Positioniereinrichtung |
| 229 | weiteren Positionierantrieb | | |
| 230 | ersten Positioniereinrichtung | 231 | erste Positionssensor |
| 240 | zweiten Positioniereinrichtung | 241 | zweite Positionssensor |
| 250 | Steuereinrichtung | 251 | Recheneinheit |
| F | Kabelförderrichtung | V1-V6 | Verfahrensschritte |
| F1 | Kabelförderrichtung | | |

## Patentansprüche

1. Kabelbearbeitungsvorrichtung (20; 20) zum Bearbeiten eines Kabels (15), insbesondere eine Crimpstation zum Konfektionieren einer Kabelverbindung an einem Kabelende des Kabels, umfassend eine erste Werkzeugmontage (22); einen ersten Kabelanschlag (25); eine erste Positioniereinrichtung (30; 230) mit einem ersten Positionierantrieb (35) zum vertikalen Positionieren der ersten Werkzeugmontage (22) relativ zu einer Kabelförderrichtung (F; F1) einer Kabelbeförderungseinrichtung (100; 200); und eine Steuereinrichtung (50; 250), welche mit dem ersten Positionierantrieb (35) zum Austausch von ersten Steuerdaten verbunden ist, wobei die Kabelbeförderungseinrichtung (100; 200) einen schwenkbaren Förderarm (110) mit einer Führungseinheit (115) aufweist, und der erste Kabelanschlag ausgebildet ist, den schwenkbaren Förderarm (110) und/oder die Führungseinheit (115) zu fixieren, **dadurch gekennzeichnet, dass** eine zweite Positioniereinrichtung (40; 240) mit einem zweiten Positionierantrieb (45) zum zumindest vertikalen Positionieren des ersten Kabelanschlags (25) relativ zur Kabelförderrichtung (F; F1) der Kabelbeförderungseinrichtung (100; 200) vorhanden ist, wobei der zweite Positionierantrieb (45) mit der Steuereinrichtung (50; 250) zum Austausch von zweiten Steuerdaten verbunden ist, und zum zumindest vertikalen Positionieren des ersten Kabelanschlags (25) verbunden ist.

2. Kabelbearbeitungsvorrichtung nach Anspruch 1, **dadurch gekennzeichnet, dass** eine erste Positionssensorik (31) zum Erfassen zumindest der vertikalen Position der ersten Werkzeugmontage (22) vorhanden ist, wobei die erste Positionssensorik (31) am ersten Positionierantrieb (35) angeordnet ist und/oder einen ersten Positionssensor (231) umfasst.

3. Kabelbearbeitungsvorrichtung nach einem der Ansprüche 1 oder 2, **dadurch gekennzeichnet, dass** eine zweite Positionssensorik (41) zum Erfassen zumindest der vertikalen Position des ersten Kabelanschlags (25) vorhanden ist, wobei die zweite Positionssensorik (41) am zweiten Positionierantrieb (45) angeordnet ist und/oder einen zweiten Positionssensor (241) umfasst.

4. Kabelbearbeitungsvorrichtung nach einem der Ansprüche 1 bis 3, **dadurch gekennzeichnet, dass** die Steuereinrichtung (50; 250) eine Recheneinheit (51) aufweist und die Steuereinrichtung (50; 250) bevorzugt mit der ersten Positionssensorik (31) und/oder mit der zweiten Positionssensorik (41) zum Austauschen von Sensordaten verbunden ist.

5. Kabelbearbeitungsvorrichtung nach Anspruch 4, **dadurch gekennzeichnet, dass** die Recheneinheit (51; 251) ausgebildet ist, um aus den Sensordaten der ersten Positionssensorik (31) zumindest einen Steuerbefehl zum Positionieren der ersten Werkzeugmontage (22) zu erstellen und/oder um aus den Sensordaten der zweiten Positionssensorik (41) zumindest einen weiteren Steuerbefehl zum Positionieren des ersten Kabelanschlags (25) zu erstellen.

6. Kabelbearbeitungsvorrichtung nach einem der Ansprüche 1 bis 5, **dadurch gekennzeichnet, dass** zumindest eine Speichereinheit (52; 252) und/oder eine Datenbank (60) vorhanden ist, welche mit der Steuereinrichtung (50; 250) verbunden ist, wobei die Steuereinrichtung (50; 250) ausgebildet ist, um zumindest einen Steuerbefehl aus der zumindest einen Speichereinheit (52; 252) und/oder aus der Datenbank (60) abzurufen, um zumindest einen der beiden Positionierantriebe (35; 45) anzutreiben.

7. Kabelbearbeitungsvorrichtung nach Anspruch 1 bis 6, **dadurch gekennzeichnet, dass** eine Basisstruktur (21a) vorhanden ist und die erste Werkzeugmontage (22) ortsfest an der Basisstruktur (21a) angeordnet ist, wobei die Basisstruktur (21a) mithilfe der ersten Positioniereinrichtung (30) relativ zur Kabelförderrichtung (F; F1) der Kabelförderungseinrichtung (100; 200) zumindest vertikal positionierbar ist.

8. Kabelbearbeitungsvorrichtung nach Anspruch 1 bis 7, **dadurch gekennzeichnet, dass** ein weiterer Kabelanschlag (27; 227) und eine weitere Positioniereinrichtung (28; 228) vorhanden sind, wobei die weitere Positioniereinrichtung (28; 228) einen weiteren Positionierantrieb (29; 229) zum zumindest vertikalen Positionieren des weiteren Kabelanschlags (27; 227) aufweist.

9. Kabelbearbeitungsvorrichtung nach Anspruch 1 bis 8, **dadurch gekennzeichnet, dass** eine Detektionseinrichtung (80) zum Erfassen von kabelspezifischen Daten und/oder werkzeugspezifischen Daten vorhanden ist und die Detektionseinrichtung (80) bevorzugt mit der Steuereinrichtung (50; 250) zum Austausch der kabelspezifischen Daten und/oder werkzeugspezifischen Daten verbunden ist.

10. Computerimplementiertes Verfahren zum Konfigurieren einer Kabelbearbeitungsvorrichtung nach einem der Ansprüche 1 bis 9, wobei die Kabelbearbeitungsvorrichtung (20; 220)ein Positionieren der ersten Werkzeugmontage (22) und des ersten Kabelanschlags (25) ausführt, wobei die erste Werkzeugmontage (22) und der erste Kabelanschlag (25), insbesondere unabhängig voneinander, vertikal positioniert werden und das Positionieren abhängig von einer Kabelförderrichtung (F; F1) einer Kabelbeförderungseinrichtung (100; 200) erfolgt, wobei das Positionieren bevorzugt vor einem Kabelbearbeitungsschritt mit der Kabelbearbeitungsvorrichtung (20; 220) erfolgt.

11. Computerimplementiertes Verfahren nach Anspruch 10 **dadurch gekennzeichnet, dass** Sensordaten von einer ersten Positionssensorik (31) und/oder einer zweiten Positionssensorik (41) erfasst werden und die erste Werkzeugmontage (22) und/oder der erste Kabelanschlag (25) auf Basis der Sensordaten positioniert werden, **wobei** die Steuereinrichtung (50; 250) bevorzugt Steuerdaten zum Positionieren der Werkzeugmontage (22) und/oder des ersten Kabelanschlags (25) aus eine Speichereinheit (51; 251) und/oder einer Datenbank (60) abruft.

12. Computerimplementiertes Verfahren nach einem der Ansprüche 10 oder 11 **dadurch gekennzeichnet, dass** das Positionieren der erste Werkzeugmontage (22) und/oder des ersten Kabelanschlags (25) auf Basis von kabelspezifischen Daten und/oder werkzeugspezifischen Daten erfolgt.

13. Computerimplementiertes Verfahren nach einem der Ansprüche 10 bis 12, wenn angewendet auf eine Kabelbearbeitungsvorrichtung (20; 220) nach Anspruch 9, **gekennzeichnet durch** ein computerimplementiertes Verfahren zum automatischen Bestimmen und Erzeugen von Steuerbefehlen und/oder Steuerdaten zum Steuern einer Kabelbearbeitungsvorrichtung, wobei zumindest ein Steuerdatensatz und/oder eines Steuerbefehls erzeugt wird und gespeichert wird, insbesondere mehrere Steuerdatensätze und/oder Steuerbefehle erzeugt werden und gespeichert werden.

14. Computerprogrammprodukt (55) umfassend Steuerbefehle und/oder Steuerdaten, die bei der Ausführung des Programms durch eine Kabelbearbeitungsvorrichtung (20; 220) nach einem der Ansprüche 1 bis 9 diese veranlassen, das Verfahren nach einem der Ansprüche 10 bis 13 auszuführen.

15. Computerlesbares Speichermedium (150), auf dem das Computerprogramm (55) nach Anspruch 14 gespeichert ist.

## Claims

1. Cable processing device (20; 20) for processing a cable (15), in particular a crimping station for making a cable connection to a cable end of a cable, comprising a first tool mounting (22); a first cable stop (25); a first positioning means (30; 230) with a first positioning drive (35) for vertically positioning the first tool mounting (22) relative to a cable conveying direction (F; F1) of a cable conveying means (100; 200); and a control means (50; 250) connected to the first positioning drive (35) for exchanging first control data, wherein the cable conveying means (100; 200) comprises a pivotable conveying arm (110) with a guide unit (115) and the first cable stop is configured to fix the pivotable conveying arm (110) and/or the guide unit (115) **characterized in that** a second positioning means (40; 240) comprising a second positioning drive (45) for at least vertically positioning the first cable stop (25) relative to the cable conveying direction (F; F1) of the cable conveying device (100; 200) is provided wherein the second positioning drive (45) is connected to the control means (50; 250) for exchanging second control data and for at least vertical positioning of the first cable stop (25).

2. Cable processing device according to Claim 1, **characterized in that** a first position sensor system (31) for detecting at least the vertical position of the first tool mounting (22) is provided wherein the first position sensor system (31) is arranged on the first positioning drive (35) and/or comprises a first position sensor (231).

3. Cable processing device according to one of Claims 1 or 2, **characterized in that** a second position sensor system (41) for detecting at least the vertical position of the first cable stop (25) is provided, wherein the second position sensor system (41) is arranged on the second positioning drive (45) and/or comprises a second position sensor (241).

4. Cable processing device according to one of Claims 1 to 3, **characterized in that** the control means (50; 250) has a computing unit (51) and the control means (50; 250) is preferably connected to the first position sensor system (31) and/or is connected to the second position sensor system (41) for exchanging sensor data.

5. Cable processing device according to Claim 4, **characterized in that** the computing unit (51; 251) is configured to create at least one control command for positioning the first tool mounting (22) from the sensor data of the first position sensor system (31), and/or to create at least one further control command for positioning the first cable stop (25) from the sensor data of the second position sensor system (41).

6. Cable processing device according to one of Claims 1 to 5, **characterized in that** at least one storage unit (52; 252) and/or a database (60) is provided, which is connected to the control means (50; 250), wherein the control means (50; 250) is configured to retrieve at least one control command from the at least one storage unit (52; 252) and/or from the database (60), in order to drive at least one of the two positioning drives (35; 45).

7. Cable processing device according to Claims 1 to 6, **characterized in that** a base structure (21a) is provided and the first tool mounting (22) is arranged in a stationary manner on the base structure (21a), wherein the base structure (21a) is positionable at least vertically relative to the cable conveying direction (F; F1) of the cable conveying means (100; 200) with the aid of the first positioning means (30).

8. Cable processing device according to Claims 1 to 7, **characterized in that** a further cable stop (27; 227) and a further positioning means (28; 228) are provided, wherein the further positioning means (28; 228) has a further positioning drive (29; 229) for at least vertically positioning the further cable stop (27; 227).

9. Cable processing device according to Claims 1 to 8, **characterized in that** a detection means (80) is provided for detecting cable-specific data or tool-specific data and the detection means (80) is preferably connected to the control means (50; 250) for exchanging cable-specific data and/or tool-specific data.

10. Computer-implemented method for configuring a cable processing device according to one of Claims 1 to 9, wherein the cable processing device (20; 220) executes a positioning of the first tool mounting (22) and the first cable stop (25), wherein the first tool mounting (22) and the first cable stop (25) are positioned vertically, in particular independently of one another and the positioning is carried out depending on a cable conveying direction (F; F1) of a cable conveying means (100; 200) wherein the positioning is preferably carried out before a cable processing step with the cable processing device (20; 220).

11. Computer-implemented method according to Claim 10, **characterized in that** sensor data are detected by a first position sensor system (31) and/or a second position sensor system (41) and the first tool mounting (22) and/or the first cable stop (25) are positioned on the basis of the sensor data, wherein the control device (50; 250) preferably retrieves control data for positioning the tool mounting (22) and/or the first cable stop (25) from a storage unit (51; 251) and/or a database (60).

12. Computer-implemented method according to one of Claims 10 or 11, **characterized in that** the positioning of the first tool mounting (22) and/or the first cable stop (25) is carried out on the basis of cable-specific data and/or tool-specific data.

13. Computer-implemented method according to one of Claims 10 to 12, when applied to a cable processing device (20; 220) according to Claim 9, **characterized by** a computer-implemented method for automatic determination and production of control commands and/or control data for controlling a cable processing device, wherein at least one control dataset and/or a control command is generated and stored, in particular a plurality of control datasets and/or control commands are produced and stored.

14. Computer program product (55) comprising control commands and/or control data which when executing the program by a cable processing device (20; 220) according to one of Claims 1 to 9 cause these to execute the method according to one of Claims 10 to 13.

15. Computer-readable storage medium (150) on which the computer program (55) according to Claim 14 is stored.

## Revendications

1. Dispositif de traitement de câble (20, 20) pour traiter un câble (15), en particulier un poste de sertissage pour confectionner une liaison de câble à une extrémité de câble du câble, comprenant un premier montage d'outil (22), une première butée de câble (25), un premier système de positionnement (30, 230) avec un premier système d'entraînement de positionnement (35) pour le positionnement vertical du premier montage d'outil (22) par rapport à une direction de transport de câble (F, F1) d'un système de transport de câble (100, 200) et un système de commande (50, 250), lequel est relié au premier système d'entraînement de positionnement (35) pour l'échange des premières données de commande, sachant que le système de transport de câble (100, 200) comporte un bras de transport pivotable (110) avec une unité de guidage (115) et la première butée de câble est constituée pour fixer le bras de transport pivotable (110) et/ou l'unité de guidage (115),
**caractérisé en ce qu'**un deuxième système de positionnement (40, 240) est présent avec un deuxième système d'entraînement de positionnement (45) pour le positionnement au moins vertical de la première butée de câble (25) par rapport à la direction de transport de câble (F, F1) du système de transport de câble (100, 200), sachant que le deuxième système d'entraînement de positionnement (45) est relié au système de commande (50, 250) pour l'échange des deuxièmes données de commande et pour le positionnement au moins vertical de la première butée de câble (25).

2. Dispositif de traitement de câble selon la revendication 1, **caractérisé en ce qu'**un premier système de détection de position (31) est présent pour la saisie au moins de la position verticale du premier montage d'outil (22), sachant que le premier système de détection de position (31) est disposé sur le premier système d'entraînement de positionnement (35) et/ou comprend un premier capteur de position (231).

3. Dispositif de traitement de câble selon l'une quelconque des revendications 1 ou 2, **caractérisé en ce qu'**un deuxième système de détection de position (41) est présent pour la saisie au moins de la position verticale de la première butée de câble (25), sachant que le deuxième système de détection de position (41) est disposé sur le deuxième système d'entraînement de positionnement (45) et/ou comprend un deuxième capteur de position (241).

4. Dispositif de traitement de câble selon l'une quelconque des revendications 1 à 3, **caractérisé en ce que** le système de commande (50, 250) comporte une unité de calcul (51) et le système de commande (50, 250) est relié de préférence au premier système de détection de position (31) et/ou au deuxième système de détection de position (41) pour l'échange de données de commande.

5. Dispositif de traitement de câble selon la revendication 4, **caractérisé en ce que** l'unité de calcul (51, 251) est constituée pour établir au moins un ordre de commande pour le positionnement du premier montage d'outil (22) à partir des données de détection du premier système de détection de positionnement (31) et/ou pour établir au moins un autre ordre de commande pour le positionnement de la première butée de câble (25) à partir des données de détection du deuxième système de détection de positionnement (41).

6. Dispositif de traitement de câble selon l'une quelconque des revendications 1 à 5, **caractérisé en ce qu'**au moins une unité de mémorisation (52, 252) et/ou une banque de données (60) sont présentes, lesquelles sont reliées au système de commande (50, 250), sachant que le système de commande (50, 250) est constitué pour appeler au moins un ordre de commande à partir d'au moins une unité de mémorisation (52, 252) et/ou à partir d'une banque de données (60) pour entraîner au moins un des deux systèmes d'entraînement de positionnement (35, 45).

7. Dispositif de traitement de câble selon l'une quelconque des revendications 1 à 6, **caractérisé en ce qu'**une structure de base (21a) est présente et le premier montage d'outil (22) est disposé fixement sur la structure de base (21a), sachant que la structure de base (21a) peut être positionnée au moins verticalement à l'aide du premier système de positionnement (30) par rapport à la direction de transport de câble (F, F1) du système de transport de câble (100, 200).

8. Dispositif de traitement de câble selon l'une quelconque des revendications 1 à 7, **caractérisé en ce qu'**une autre butée de câble (27, 227) et un autre système de positionnement (28, 228) sont présents, sachant que l'autre système de positionnement (28, 228) comporte un autre système d'entraînement de positionnement (29, 229) pour le positionnement au moins vertical de l'autre butée de câble (27, 227).

9. Dispositif de traitement de câble selon l'une quelconque des revendications 1 à 8, **caractérisé en ce qu'**un système de détection (80) est présent pour la saisie de données spécifiques au câble et/ou de données spécifiques à l'outil et le système de détection (80) est relié de préférence au système de commande (50, 250) pour l'échange des données spécifiques au câble et/ou des données spécifiques à l'outil.

10. Procédé mis en œuvre par ordinateur pour configurer un dispositif de traitement de câble selon l'une quelconque des revendications 1 à 9, sachant que le dispositif de traitement de câble (20, 220) exécute un positionnement du premier montage d'outil (22) et de la première butée de câble (25), sachant que le premier montage d'outil (22) et la première butée de câble (25) sont positionnés verticalement en particulier indépendamment l'un de l'autre, et le positionnement a lieu indépendamment d'une direction de transport de câble (F, F1) d'un système de transport de câble (100, 200), sachant que le positionnement a lieu de préférence avant une étape de traitement de câble avec le dispositif de traitement de câble (20, 220).

11. Procédé mis en œuvre par ordinateur selon la revendication 10, **caractérisé en ce que** les données de détection sont saisies par un premier système de détection de positionnement (31) et/ou un deuxième système de détection de positionnement (41) et le premier montage d'outil (22) et/ou la première butée de câble (25) sont positionnés sur la base des données de détection, sachant que le système de commande (50, 250) appelle de préférence des données de commande pour positionner le montage d'outil (22) et/ou la première butée de câble (25) à partir d'une unité de mémorisation (51, 251) et/ou d'une banque de données (60).

12. Procédé mis en œuvre par ordinateur selon l'une quelconque des revendications 10 ou 11, **caractérisé en ce que** le positionnement du premier montage d'outil (22) et/ou de la première butée de câble (25) a lieu sur la base de données spécifiques au câble et/ou de données spécifiques à l'outil.

13. Procédé mis en œuvre par ordinateur selon l'une quelconque des revendications 10 à 12, lorsqu'il est utilisé sur un dispositif de traitement de câble (20, 220) selon la revendication 9, **caractérisé par** un procédé mis en œuvre par ordinateur pour la détermination automatique et la production d'ordres de commande et/ou de données de commande pour commander un dispositif de traitement de commande, sachant qu'au moins un ensemble de données de commande et/ou un ordre de commande sont générés et sont mémorisés, en particulier plusieurs ensembles de données de commande et/ou ordres de commande sont générés et sont mémorisés.

14. Progiciel (55) comprenant des ordres de commande et/ou des données de commande, qui entraînent l'exécution du procédé selon l'une quelconque des revendications 10 à 13 lors de l'exécution du programme par un dispositif de traitement de câble (20, 220) selon l'une quelconque des revendications 1 à 9.

15. Moyen de mémorisation lisible par un ordinateur (150) sur lequel le programme informatique (55) est mémorisé selon la revendication 14.
